# EUROPEAN PATENT SPECIFICATION

(11) **EP 4 583 054 B1**
(45) Date of publication and mention of the grant of the patent: **23.09.2026**
(21) Application number: 23860027.4
(22) Date of filing: 15.08.2023
(51) Int. Cl.: H04N 1/60, H04N 1/62, H04N 1/00, G06V 10/762, G06T 1/00, G06T 7/00, G06T 7/90, G06V 10/56, G06V 20/00

(54) **INFORMATION PROCESSING DEVICE, INFORMATION PROCESSING METHOD, AND PROGRAM**
INFORMATIONSVERARBEITUNGSVORRICHTUNG, INFORMATIONSVERARBEITUNGSVERFAHREN UND PROGRAMM
DISPOSITIF DE TRAITEMENT D'INFORMATIONS, PROCÉDÉ DE TRAITEMENT D'INFORMATIONS, ET PROGRAMME

(30) Priority: 29.08.2022 JP 2022135631
(43) Date of publication of application: 09.07.2025
(73) Proprietor: Sony Semiconductor Solutions Corporation, Atsugi-shi, Kanagawa 243-0014 (JP)
(72) Inventor: ITAGAKI Toshiki, Atsugi-shi, Kanagawa 243-0014 (JP)
(74) Representative: MFG Patentanwälte Meyer-Wildhagen Meggle-Freund Gerhard PartG mbB
(86) International application number: PCT/JP2023/029485
(87) International publication number: WO 2024/048262

(56) References cited:
- EP-A1- 4 047 866
- JP-A- 2002 074 451
- JP-A- 2009 200 755
- KR-A- 20140 074 238
- US-A1- 2002 051 577
- US-A1- 2017 366 709

## Description

### TECHNICAL FIELD

The present disclosure relates to an information processing device, an information processing method, and a program, and more particularly, to an information processing device, an information processing method, and a program capable of detecting falsification of an image more effectively.

### BACKGROUND ART

In recent years, there has been a demand for development of a technology for detecting whether or not image editing for falsifying an image has been performed when, in uploading a certain image to social media, the image has been edited. For example, image editing that changes the context of an image is assumed to be image falsification, and image editing that changes the color tone (brightness, contrast, or the like) of an image is assumed to be normal color conversion in which the image is not recognized as being falsified.

For example, conventionally, as a method of detecting falsification of an image, there are a method using a cryptographic hash, a method using an electronic watermark, a method using a robust hash, a method using machine learning, and the like.

However, in the method using the cryptographic hash, all image editing including normal color conversion is regarded as falsification. In the method using the electronic watermark, a semifragmented electronic watermark has a security problem, and a fragmented electronic watermark considers all image editing including normal color conversion as falsification. In the method using the robust hash, since the robust hash has less data, normal color conversion is limited. In the method using the machine learning, performance depends on learning, and a large learning cost is required to reach a certain performance.

Here, Patent Document 1 discloses a technology of performing color transfer between a first image and a second image in order to correct a color difference between the images.

### CITATION LIST

### PATENT DOCUMENT

Patent Document 1: Japanese Patent Application Laid-Open No. 2014-116012 Patent Document 2 : KR 2014-0074238 A which discloses a **color-transfer** method for compensating color differences between at least two images, wherein corresponding feature points are extracted, color anf geometric mapping is computed for being applied to one image. A comparison of the compensated image with the other enables detecting failure regions, and then performing color transfer while excluding those failure regions.

### SUMMARY OF THE INVENTION

### PROBLEMS TO BE SOLVED BY THE INVENTION

Meanwhile, in the technology disclosed in Patent Document 1 described above, a concept of a failure region is used, and the color transfer is controlled on the basis of a result of detecting the failure region. As described above, in consideration of applying the technology in which the failure region is allowed to the detection of falsification of an image, the failure region is always recognized as falsification. That is, it is difficult to apply the technology disclosed in Patent Document 1 described above to detection of falsification of an image.

For example, in the technology disclosed in Patent Document 1, since a relationship between the first image and the second image is not defined, a region where irreversible conversion from the first image to the second image is performed is a failure region. Furthermore, the calculation of a color map described in Patent Document 1 is a color mapping method based on gain, offset, and gamma, and has a low degree of freedom. Therefore, in a case where color conversion that does not apply to this model is performed, a region where the color conversion has been performed is a failure region.

The present disclosure has been made in view of such a situation, and enables more effective detection of falsification of an image.

### SOLUTIONS TO PROBLEMS

According to a first aspect, the present invention provides an information processing device in accordance with independent claim 1. According to a second aspect, the present invention provides an information processing method in accordance with independent claim 12. According to a third aspect, the present invention provides a program in accordance with claim 13. Further aspects are set forth in the dependent claims, the drawings and the following description.

An information processing device according to one aspect of the present disclosure includes: a color conversion unit that makes an estimate of color conversion applied to a second image generated by image editing on a first image, and outputs a color conversion trial result in which color conversion according to the estimate is applied to the first image; and a judgement unit that compares the color conversion trial result with the second image to judge whether presence or absence of falsification in the second image.

An information processing method or a program according to one aspect of the present disclosure includes: making an estimate of color conversion applied to a second image generated by image editing on a first image, and outputting a color conversion trial result in which color conversion according to the estimate is applied to the first image; and comparing the color conversion trial result with the second image to judge whether presence or absence of falsification in the second image.

In one aspect of the present disclosure, an estimate of color conversion applied to the second image generated by image editing on the first image is made, a color conversion trial result in which color conversion according to the estimate is applied to the first image is output; and the color conversion trial result is compared with the second image to judge whether presence or absence of falsification in the second image.

### BRIEF DESCRIPTION OF DRAWINGS

Fig. 1 is a diagram explaining a typical use case of the present technology.
Fig. 2 is a block diagram illustrating a configuration example of a first embodiment of a falsification detection device to which the present technology is applied.
Fig. 3 is a block diagram illustrating a configuration example of a color conversion unit.
Fig. 4 is a diagram illustrating an example of a color conversion database.
Fig. 5 is a flowchart explaining falsification detection processing.
Fig. 6 is a flowchart explaining a first processing example of color conversion processing.
Fig. 7 is a flowchart explaining a second processing example of the color conversion processing.
Fig. 8 is a diagram illustrating an example of a color conversion database in which color variations are registered.
Fig. 9 is a block diagram illustrating a modification of the color conversion unit.
Fig. 10 is a diagram illustrating an example of a first image and a color space thereof.
Fig. 11 is a diagram illustrating an example of a second image and a color space thereof.
Fig. 12 is a diagram illustrating an example of a dendrogram showing a correspondence between cluster numbers and color numbers.
Fig. 13 is a diagram illustrating an example of data registered in a color correspondence relationship.
Fig. 14 is a diagram explaining a distance in the color space corresponding to the first image.
Fig. 15 is a diagram explaining a distance in the color space corresponding to the second image.
Fig. 16 is a block diagram illustrating a first application example of a falsification detection system to which the falsification detection device of Fig. 2 is applied.
Fig. 17 is a block diagram illustrating a second application example of the falsification detection system to which the falsification detection device of Fig. 2 is applied.
Fig. 18 is a block diagram illustrating a configuration example of a second embodiment of a falsification detection device to which the present technology is applied.
Fig. 19 is a flowchart explaining falsification detection processing.
Fig. 20 is a block diagram illustrating a configuration example of a first modification of the falsification detection device in Fig. 18.
Fig. 21 is a block diagram illustrating a configuration example of a second modification of the falsification detection device in Fig. 18.
Fig. 22 is a block diagram illustrating a configuration example of a color conversion unit.
Fig. 23 is a block diagram illustrating a first application example of the falsification detection system to which the falsification detection device of Fig. 18 is applied.
Fig. 24 is a block diagram illustrating a second application example of the falsification detection system to which the falsification detection device of Fig. 18 is applied.
Fig. 25 is a block diagram illustrating a third application example of the falsification detection system to which the falsification detection device of Fig. 18 is applied.
Fig. 26 is a block diagram illustrating a fourth application example of the falsification detection system to which the falsification detection device of Fig. 18 is applied.
Fig. 27 is a block diagram illustrating a configuration example of a third embodiment of a falsification detection device to which the present technology is applied.
Fig. 28 is a flowchart explaining falsification detection processing.
Fig. 29 is a block diagram illustrating a configuration example of a first modification of the falsification detection device in Fig. 27.
Fig. 30 is a block diagram illustrating a first application example of the falsification detection system to which the falsification detection device of Fig. 27 is applied.
Fig. 31 is a block diagram illustrating a second application example of the falsification detection system to which the falsification detection device of Fig. 27 is applied.
Fig. 32 is a block diagram illustrating a third application example of the falsification detection system to which the falsification detection device of Fig. 27 is applied.
Fig. 33 is a block diagram illustrating a fourth application example of the falsification detection system to which the falsification detection device of Fig. 27 is applied.
Fig. 34 is a block diagram illustrating a configuration example of a fourth embodiment of a falsification detection device to which the present technology is applied.
Fig. 35 is a flowchart illustrating a first processing example of falsification detection processing.
Fig. 36 is a flowchart illustrating a second processing example of falsification detection processing.
Fig. 37 is a block diagram illustrating a configuration example of a fifth embodiment of a falsification detection device to which the present technology is applied.
Fig. 38 is a diagram explaining a display example of an image display unit.
Fig. 39 is a diagram for explaining temporal switching of the image display unit.
Fig. 40 is a flowchart explaining falsification detection processing.
Fig. 41 is a block diagram illustrating a first application example of a falsification detection system to which the falsification detection device of Fig. 37 is applied.
Fig. 42 is a block diagram illustrating a second application example of a falsification detection system to which the falsification detection device of Fig. 37 is applied.
Fig. 43 is a block diagram illustrating a configuration example of an embodiment of a computer to which the present technology is applied.

### MODE FOR CARRYING OUT THE INVENTION

Specific embodiments to which the present technology is applied will be described below in detail with reference to the drawings.

### <Typical use case>

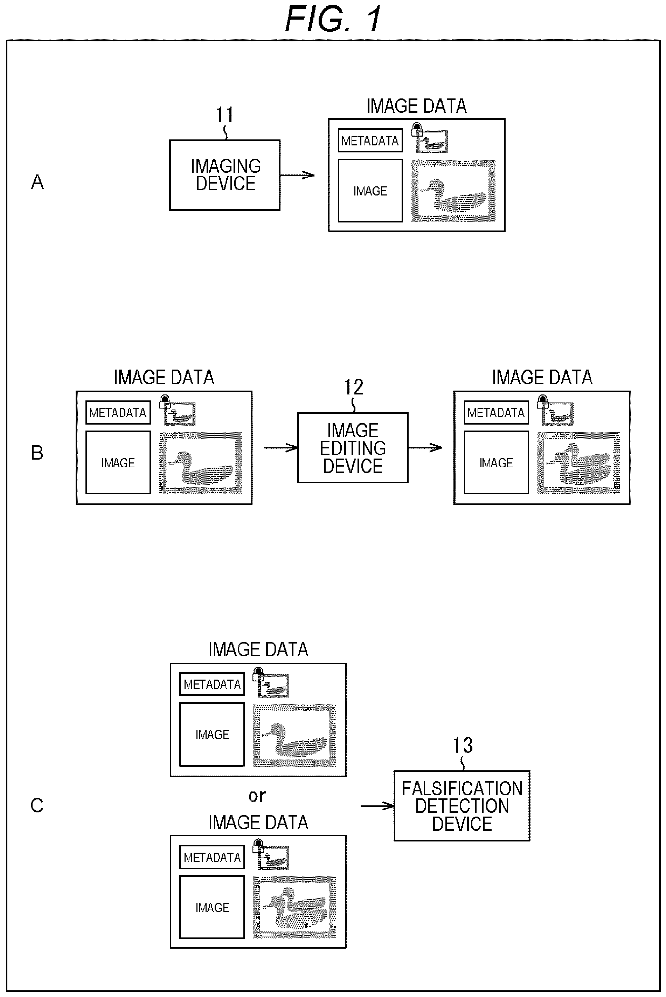

A typical use case of the present technology will be described with reference to Fig. 1.

For example, a typical use case includes an imaging phase (A of Fig. 1) using an imaging device 11, an image editing phase (B of Fig. 1) using an image editing device 12, and a verification phase (C of Fig. 1) using a falsification detection device 13.

The imaging phase is performed as an image is captured using the imaging device 11. For example, when outputting image data including an image obtained by imaging, the imaging device 11 can store the image as a reference image in metadata. Note that the imaging device 11 may store an image obtained by sampling an image obtained by imaging in the metadata as a reference image. Then, the image data output from the imaging device 11 is created such that the image recorded in a main body of the image data can be edited and the metadata cannot be edited. This enables correct judgement in the verification phase.

The image editing phase is performed when an image editor who obtains the image data output from the imaging device 11 in the image capturing phase by some method performs image editing (normal color conversion or falsification) on the image recorded in the main body of the image data using the image editing device 12. At this time, since the image data is created so that the metadata cannot be edited, the image editor cannot edit the metadata.

The verification phase is performed by the falsification detection device 13 when it is necessary to detect falsification of an image. For example, in a typical use case, when image data output from the imaging device 11 in the image capturing phase or image data subjected to image editing on an image in the image editing device 12 in the image editing phase is uploaded to social media, it is necessary to detect falsification of the image. For example, the falsification detection device 13 can be mounted on a server constituting social media to which image data is uploaded, and may display a judgement result obtained by judging whether or not an image has been falsificated together with the uploaded image.

Here, definitions or assumptions of terms used in the present embodiments will be described.

Normal color conversion is image editing recognized as not falsification, and is image editing for changing a color of an image to another color. For example, the normal color conversion typically includes brightness conversion, contrast conversion, gamma conversion, white balance adjustment, color fogging correction, color difference conversion, demosaic, color enhancement, hue conversion, and the like. Furthermore, the image editing included in the color conversion can be determined statically or dynamically.

Falsification is image editing in which the context of an image is recognized to have been changed. For example, the falsification typically includes splicing, copy-move, erasure, face swapping, lip sync, and the like. Furthermore, image editing included in the falsification can be decided statically or dynamically.

The color is typically a one-dimensional or three-dimensional quantity. That is, a case where the color is a one-dimensional quantity corresponds to a monochrome image, and a case where the color is a three-dimensional quantity corresponds to a color image. Note that the present technology can also be applied to two-dimensional or four-dimensional or more colors.

A color correspondence relationship is a relationship in which paired colors are associated in a first image and a second image, and in the present embodiment, a model in which color conversion is expressed by a set of a plurality of color correspondence relationships is used.

Color interpolation is a procedure of generating a more reliable color correspondence relationship using a set including a plurality of color correspondence relationships.

As a color space, an RGB color space, an HSV color space, an HSL color space, a YCrCb color space, or the like can be used.

As a distance in the color space, in addition to a general distance such as a Minkowski distance or a Mahalanobis distance, divergence such as Kullback-Leibler divergence, cosine similarity, or the like can also be used. Furthermore, the distance can be obtained for each channel, and the processing can be performed independently for each channel.

A median value may be acquired for each channel, or may be acquired by projecting to a certain one-dimensional axis. Furthermore, the median value may be decided using a geometric median value or a projection median value. Furthermore, the median value may be obtained by a partial order relationship decided by a magnitude relationship of the same channel.

### <First configuration example of falsification detection device>

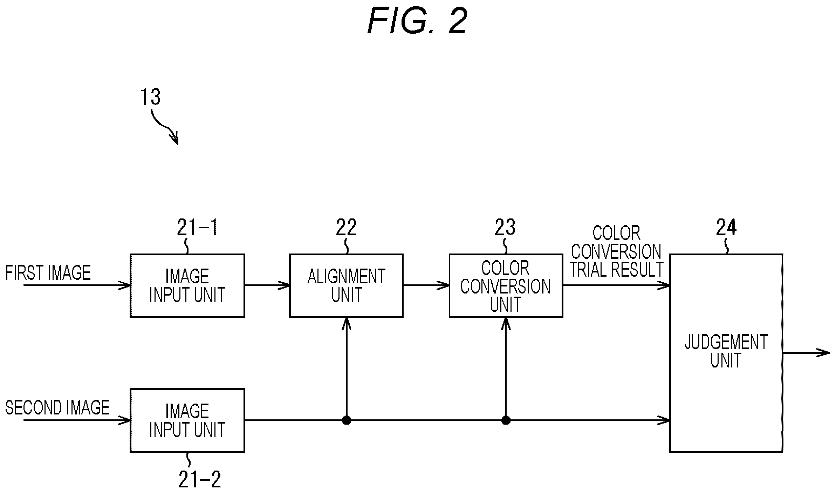

Fig. 2 is a block diagram illustrating a configuration example of a first embodiment of a falsification detection device to which the present technology is applied.

As illustrated in Fig. 2, the falsification detection device 13 includes image input units 21-1 and 21-2, an alignment unit 22, a color conversion unit 23, and a judgement unit 24. Then, a reference image to be referred to when the presence or absence of falsification is detected and a query image to be a target for detecting the presence or absence of falsification are input to the falsification detection device 13. For example, as described above with reference to Fig. 1, the reference image is an image itself obtained by imaging in the imaging phase, and is an uneditable image stored in metadata of image data. Furthermore, the query image is an image recorded in the main body of the image data, and is an image generated by performing image editing (normal color conversion or falsification) in the image editing phase on an image obtained by imaging in the imaging phase.

The image input unit 21-1 acquires the reference image input to the falsification detection device 13 as a first image, and supplies the first image to the alignment unit 22.

The image input unit 21-2 acquires the query image input to the falsification detection device 13 as a second image, and supplies the second image to the alignment unit 22, the color conversion unit 23, and the judgement unit 24.

In order to cope with geometric operations such as rotation and cropping applied to the second image in the image editing phase, the alignment unit 22 aligns (such as rotation and cropping) the first image on the basis of the second image such that corresponding portions of the first image and the second image are at the same position. As a result, the correspondence between each pixel constituting the first image and each pixel constituting the second image can be decided, and the color correspondence relationship between the color of the first image and the color of the second image can be specified between the corresponding pixels.

For example, the alignment unit 22 can obtain an affine transformation matrix or a homography transformation matrix including information of a rotation, a magnification, or an offset amount when aligning the first image on the basis of a cross-correlation function, a two-dimensional Fourier transform, or the like between the first image and the second image. As described above, by aligning the first images in the alignment unit 22, it is possible to avoid missing of information. Then, the alignment unit 22 supplies an image (Hereinafter, it is referred to as an aligned first image.) obtained by aligning the first images on the basis of the second image to the color conversion unit 23.

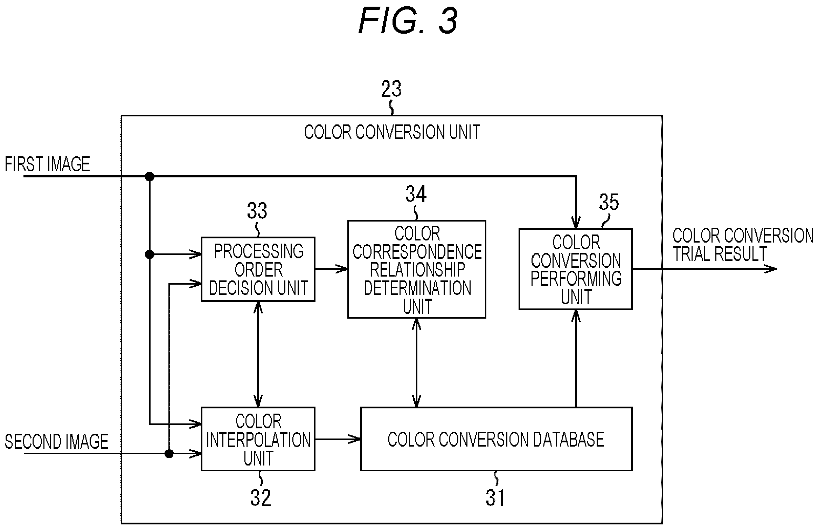

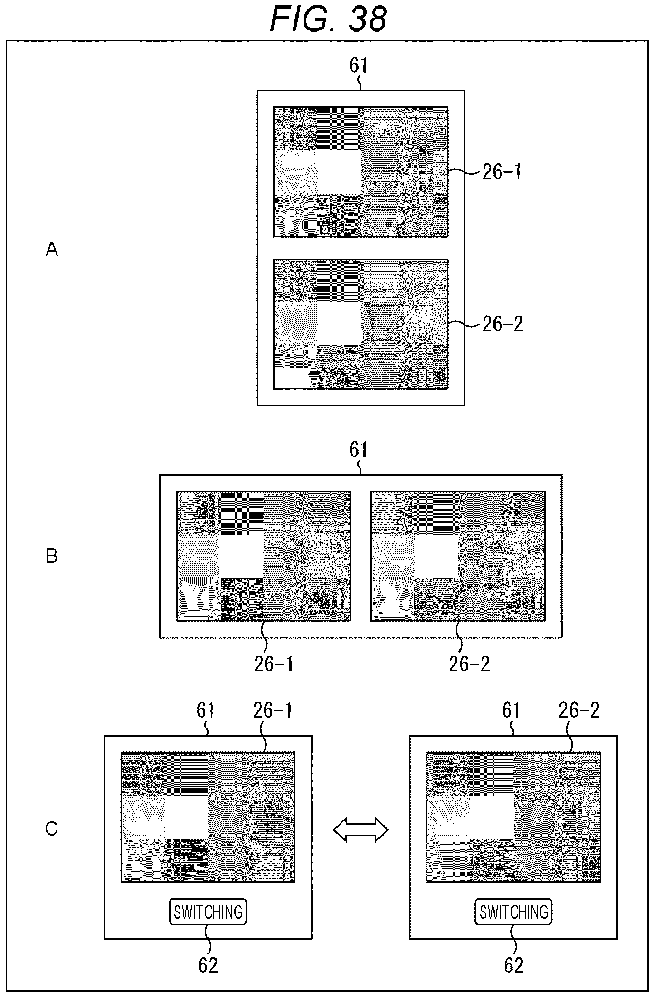

The color conversion unit 23 makes an estimate of the color conversion applied to the second image in the image editing phase with reference to the color correspondence relationship decided by the alignment unit 22, and performs color conversion processing of applying the color conversion according to the estimate to the aligned first image. As a result, the hue of the first image is converted to be similar to the hue of the second image. Then, the color conversion unit 23 supplies an image (Hereinafter referred to as a color conversion trial result.) obtained as a result of performing the color conversion processing on the aligned first image to the judgement unit 24. Note that a detailed configuration of the color conversion unit 23 will be described later with reference to Fig. 3.

The judgement unit 24 compares the color conversion trial result supplied from the color conversion unit 23 with the second image supplied from the image input unit 21-2, judges whether the presence or absence of falsification in the second image, and outputs the judgement result. Furthermore, the judgement unit 24 may make a judgement regarding a falsification position of the image.

For example, the judgement unit 24 obtains a difference between the color conversion trial result and the second image, applies a lowpass filter, and can judge whether the presence or absence of falsification in the second image according to whether or not there is a pixel exceeding a predetermined threshold. Alternatively, the judgement unit 24 can judge whether the presence or absence of falsification in the second image by inputting the color conversion trial result and the second image to a neural network. Alternatively, the judgement unit 24 can judge whether the presence or absence of falsification in the second image by extracting a feature amount of the color conversion trial result, extracting a feature amount of the second image, and inputting a difference between the feature amounts to the neural network.

Fig. 3 is a block diagram illustrating a configuration example of the color conversion unit 23.

As illustrated in Fig. 3, the color conversion unit 23 includes a color conversion database 31, a color interpolation unit 32, a processing order decision unit 33, a color correspondence relationship determination unit 34, and a color conversion performing unit 35.

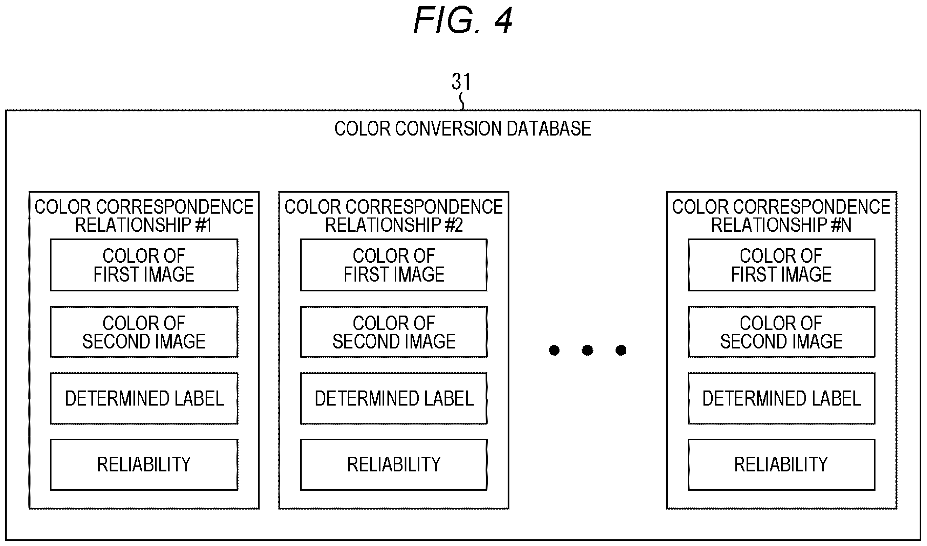

In the color conversion database 31, a plurality of color correspondence relationships to be referred to when color conversion processing is performed in the color conversion unit 23 is registered. For example, Fig. 4 illustrates an example of the color conversion database 31 in which N color correspondence relationships #1 to #N are registered, and each of the color correspondence relationships is configured by the color of the first image, the color of the second image, a determined label, and reliability. The determined label is used to identify whether or not the color correspondence relationship determination unit 34 has made a determination on each color correspondence relationship.

Furthermore, in the color conversion database 31, in addition to the color correspondence relationship determined by the alignment unit 22 in Fig. 2 being registered, the color correspondence relationship with high reliability generated in the color interpolation unit 32 is also registered.

The color interpolation unit 32 generates a highly reliable color correspondence relationship. For example, with only the color correspondence relationship decided by the alignment unit 22 in Fig. 2, it is assumed that the number of points of the color space to be sampled is smaller than the number of color correspondence relationships required for performing the color conversion processing in the color conversion unit 23, and it is considered that it is difficult for the judgement unit 24 to judge whether the presence or absence of falsification. Therefore, the color interpolation unit 32 generates a color correspondence relationship with high reliability, and the number of color correspondence relationships used when the color conversion unit 23 performs the color conversion processing is increased, so that the judgement unit 24 can easily judge whether the presence or absence of falsification.

For example, the color interpolation unit 32 can reduce the influence of falsification by performing color interpolation for obtaining an average value, a median value, or the like of a set of colors, and can generate a highly reliable color correspondence relationship. The color interpolation unit 32 may decide the set of colors by obtaining a neighborhood value in the color space of the first image of the color xᵢ of the i-th pixel constituting the first image, or may obtain the set of colors by clustering in the color space of the first image. Note that, according to Non-Patent Document 1 (Stephane Durocher, Alexandre Leblanc, Matthew Skala, "THE PROJECTION MEDIAN AS A WEIGHTED AVERAGE," Journal of Computational Geometry.), the projection median value can also be interpreted as a weighted average value.

Then, the color interpolation unit 32 can obtain the color x_{I} of the first image and the color y_{I} of the second image according to the following Formula (1) on the basis of a set I of indexes corresponding to the set of colors, arithmetic processing m representing an arithmetic operation of obtaining the average value or an arithmetic operation of obtaining the median value, the color xᵢ of the i-th pixel constituting the first image, and the color yᵢ of the i-th pixel constituting the second image. Then, the color interpolation unit 32 generates a color correspondence relationship including the color x_{I} of the first image and the color y_{I} of the second image, and registers the color correspondence relationship in the color conversion database 31.
[Math. 1] $\left\{\begin{matrix}{x}_{I} = m \left(\left\{{x}_{i}\left|i∈I\right.\right\}\right) \\ {y}_{I} = m \left(\left\{{y}_{i}\left|i∈I\right.\right\}\right)\end{matrix}\right.$

Furthermore, the color interpolation unit 32 may use a weighted average value as the average value of the set of colors. For example, in a case where the arithmetic processing m is an arithmetic operation for obtaining the projection median value, the weight wᵢ at each point of the color y_{I} of the second image obtained by the above-mentioned Formula (1) can be calculated. Then, the color interpolation unit 32 calculates the color x_{I} of the first image by obtaining the weighted average value using the weight wᵢ, generates a color correspondence relationship including the color x_{I} of the first image and the color y_{I} of the second image, and registers the color correspondence relationship in the color conversion database 31.

As described above, by generating a highly reliable color correspondence relationship in the color interpolation unit 32, for example, in a case where the color space is three-dimensional, even if the number of pixels of the first image and the second image is small and the number of points that can sample the color space is sparse, color interpolation that virtually enables highly reliable sampling is useful, and the judgement unit 24 can robustly judge the presence or absence of falsification. Furthermore, the color interpolation unit 32 selects colors having close distances in the color space and performs color interpolation, so that it is possible to reduce an error described in analysis of error described later.

The processing order decision unit 33 decides the processing order indicating the order of the color correspondence relationship to be the determination processing target in the color correspondence relationship determination unit 34, and notifies the color correspondence relationship determination unit 34 of the processing order. For example, the processing order decision unit 33 can obtain the reliability of the color correspondence relationship and decide the processing order according to the degree of reliability of the color correspondence relationship. The reliability of the color correspondence relationship can be obtained, for example, on the basis of the distance between the color xᵢ of the i-th pixel constituting the first image and the color yᵢ of the i-th pixel constituting the second image, and the smaller the distance, the higher the reliability. Then, the processing order decision unit 33 registers the reliability of the color correspondence relationship in the color conversion database 31 via the color interpolation unit 32.

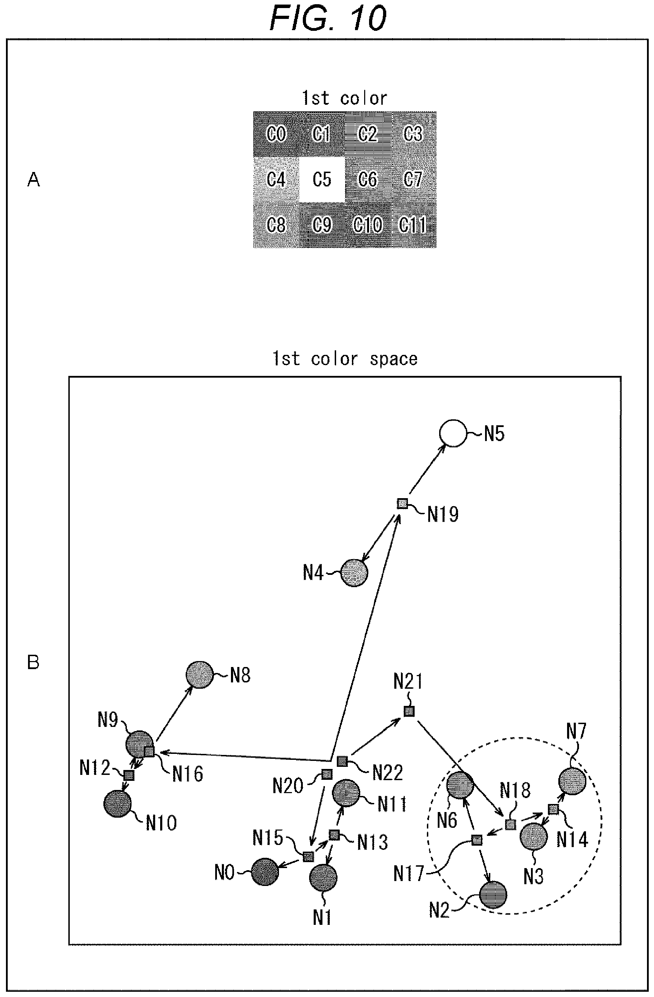

Moreover, the processing order decision unit 33 can decide the reliability by using a size of the set I of indexes corresponding to the set of colors. Furthermore, in a case where the set I is decided using hierarchical clustering to be described later with reference to Figs. 10 to 15, the processing order decision unit 33 may decide the reliability according to the hierarchy.

Here, in the present embodiment, a model having a high degree of freedom of determination for each color correspondence relationship is used. In general, in a case where a model with a high degree of freedom is used, it is difficult to achieve simultaneous optimization of all parameters. For example, Non-Patent Document 2 (Magnus Oskarsson, "Robust Image-to-Image Color Transfer Using Optimal Inlier Maximization," In Proc. of CVPR2021.) enables simultaneous optimization by using a polynomial model.

On the other hand, in the present embodiment, since the processing order decision unit 33 decides the processing order, it is possible to efficiently decide the model even in a case where it is difficult to simultaneously optimize all the parameters, and it is possible to improve the efficiency of calculation as a whole. That is, in a case where a model with a high degree of freedom is used, it is difficult to minimize the number of outliers by simultaneously fitting all colors and the optimization becomes difficult, since the calculation amount becomes enormous. On the other hand, in the present embodiment, it is possible to avoid such an enormous calculation amount.

The color correspondence relationship determination unit 34 determines whether the color correspondence relationship (the color correspondence relationship decided by the alignment unit 22 and the color correspondence relationship generated by the color interpolation unit 32) registered in the color conversion database 31 is normal color conversion or falsification. That is, it is necessary to determine that all the color correspondence relationships referred to when the color conversion is performed by the color conversion performing unit 35 are normal color conversion.

First, the color correspondence relationship determination unit 34 acquires, as a determination processing target, a color correspondence relationship in which the determined label is undetermined among the color correspondence relationships registered in the color conversion database 31 according to the processing order decided by the processing order decision unit 33. Moreover, the color correspondence relationship determination unit 34 acquires a color correspondence relationship available for determining the color correspondence relationship of the determination processing target from among the color correspondence relationships in which the determined label has been determined among the color correspondence relationships registered in the color conversion database 31. For example, the available color correspondence relationships can be decided in a manner similar to deciding a set in the color interpolation unit 32. Then, the color correspondence relationship determination unit 34 determines whether the color correspondence relationship of the determination processing target is normal color conversion or falsification by using the available color correspondence relationship.

For example, using the color xᵢ^ of the first image and the color yᵢ^ of the second image in the color correspondence relationship of the determination processing target, the set j of corresponding indexes, the color xⱼ^ of the first image and the color yⱼ^ of the second image in the available color correspondence relationship, a distance function dist, arithmetic processing m representing an arithmetic operation for obtaining the representative value, σ corresponding to a magnitude of a quantization error of the color yⱼ^ of the second image, and a threshold th, the color correspondence relationship determination unit 34 can determine that the color correspondence relationship of the determination processing target is the normal color conversion in a case where the following Formula (2) is satisfied.
[Math. 2] $m \left(\left\{\frac{dist \left(\overline{{y}_{i}}, \overline{{y}_{j}}\right) - σ}{dist \left(\overline{{x}_{i}}, \overline{{x}_{j}}\right)}\left|j∈J\right.\right\}\right) < th$

Note that the arithmetic processing m representing the arithmetic operation for obtaining the representative value may be an arithmetic operation for obtaining an average value or a maximum value, or may be an arithmetic operation for obtaining a value by an index or reliability. Furthermore, a ratio of the distances may be weighted by the reliability, or a non-linear activation function such as softmax may be used.

Then, in the case of determining that the color correspondence relationship of the determination processing target is the normal color conversion, the color correspondence relationship determination unit 34 updates the registration of the color conversion database 31 assuming that the determined label of the color correspondence relationship has been determined. Moreover, the color correspondence relationship determination unit 34 may update the reliability of the color correspondence relationship of the determination processing target with reference to the value on the left side of the above-mentioned Formula (2). On the other hand, in the case of determining that the color correspondence relationship of the determination processing target is falsification, the color correspondence relationship determination unit 34 deletes the color correspondence relationship from the color conversion database 31.

Moreover, the color correspondence relationship determination unit 34 repeatedly performs processing of updating the color conversion database 31 by making the determined label of the color correspondence relationship determined to be the normal color conversion be already determined, and of deleting the color correspondence relationship determined to be falsification from the color conversion database 31 until there is no color correspondence relationship in which the determined label is undetermined.

As described above, the color correspondence relationship determination unit 34 can give an upper limit of the inclination to the normal color conversion by using the above-mentioned Formula (2). For example, since a steep inclination emphasizes noise, the inclination of normal color conversion generally has an upper limit. Note that, in Formula (2), the first image and the second image are asymmetric.

Note that, for example, in a case where the first image is generated by processing the second image and clipping of values occurs at the time of processing, the denominator becomes very small with respect to the numerator, and it becomes difficult to correctly determine the color correspondence relationship. On the other hand, the determination on the color correspondence relationship can be stably performed under the condition of the present embodiment that the second image is generated by processing the first image.

In this manner, the color correspondence relationship based on a model with a high degree of freedom can be decided by making a determination in the color correspondence relationship determination unit 34. Then, by using a model with a high degree of freedom, it is possible to reduce the mistake of regarding errors that arise when using a model with a low degree of freedom as falsification. Furthermore, by using the reliability for determination, when an intentional attack is made, the color can be excluded as a color with low reliability.

The color conversion performing unit 35 refers to the color correspondence relationship registered in the color conversion database 31, and performs color conversion on the aligned first image supplied from the alignment unit 22 in Fig. 2. For example, in a case where the color conversion performing unit 35 searches the color conversion database 31 using the color of the first image as a key and acquires a color correspondence relationship including the color of the first image matching the color used as the key as a search result, the color conversion performing unit can acquire the color of the second image included in the color correspondence relationship as the color after the color conversion. Note that, in a case where the color correspondence relationship including the color of the first image matching the color used as the key is not registered in the color conversion database 31, the color conversion performing unit 35 may acquire the color correspondence relationship including the color of the first image close to the color used as the key as the search result by tracing the processing order in the reverse order.

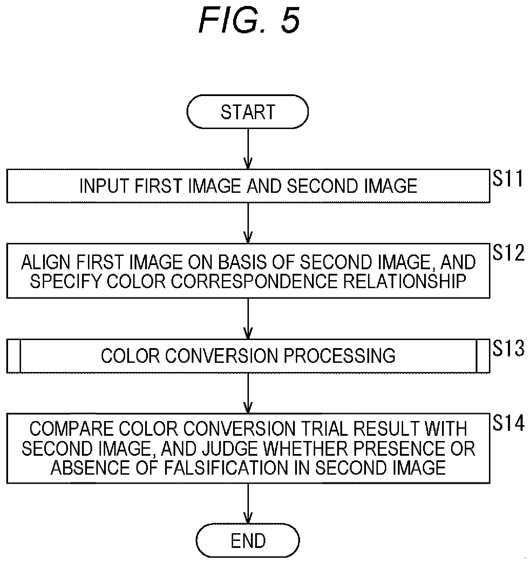

Falsification detection processing to be executed in the falsification detection device 13 will be described with reference to the flowchart illustrated in Fig. 5.

For example, when the reference image and the query image are input to the falsification detection device 13, the falsification detection processing is started. In step S11, the image input unit 21-1 acquires the reference image as the first image, and the image input unit 21-2 acquires the query image as the second image. Then, the image input unit 21-1 supplies the first image to the alignment unit 22, and the image input unit 21-2 supplies the second image to the alignment unit 22, the color conversion unit 23, and the judgement unit 24.

In step S12, the alignment unit 22 aligns the first image on the basis of the second image, specifies a color correspondence relationship between the color of the first image and the color of the second image, and registers the color correspondence relationship in the color conversion database 31. Then, the alignment unit 22 supplies the aligned first image to the color conversion unit 23.

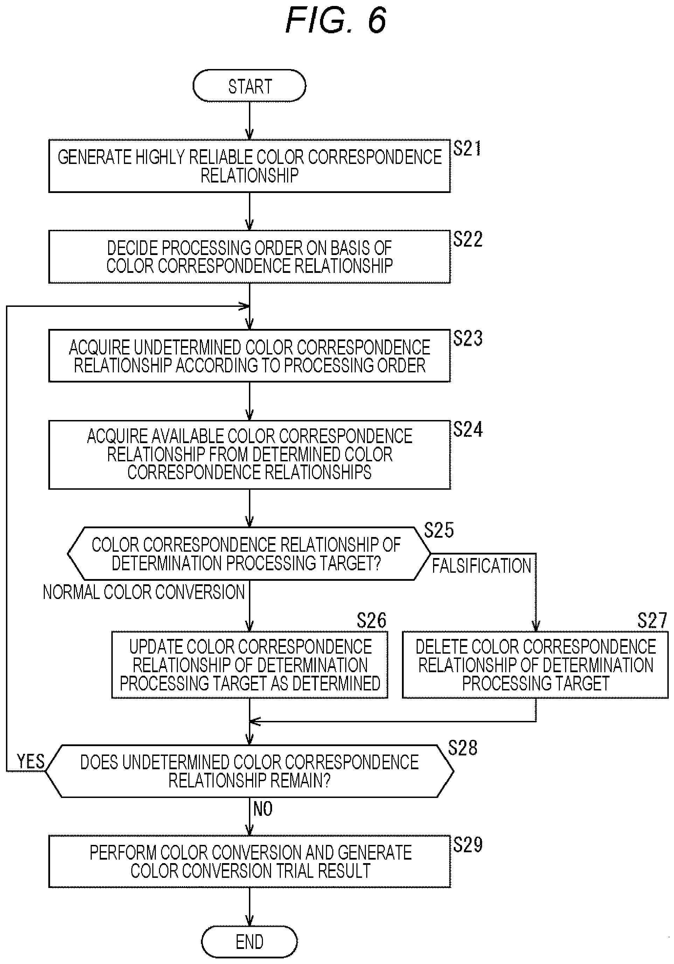

In step S13, the color conversion unit 23 makes an estimate of the color conversion applied to the second image in the image editing phase with reference to the color correspondence relationship specified in the alignment unit 22 in step S12, and performs the color conversion processing (see Fig. 6) of applying the color conversion according to the estimate to the aligned first image. Then, the color conversion unit 23 supplies a color conversion trial result obtained by performing the color conversion processing to the judgement unit 24.

In step S14, the judgement unit 24 compares the color conversion trial result supplied from the color conversion unit 23 in step S13 with the second image supplied from the image input unit 21-2 in step S11, and judges whether the presence or absence of falsification in the second image. For example, the judgement unit 24 outputs a judgement result indicating that there is falsification in a case where it is judged that there is falsification in the second image, and outputs a judgement result indicating that there is no falsification in a case where it is judged that there is no falsification in the second image. Thereafter, the falsification detection processing ends.

A first processing example of the color conversion processing performed in step S13 in Fig. 5 will be described with reference to a flowchart illustrated in Fig. 6.

In step S21, the color interpolation unit 32 generates a highly reliable color correspondence relationship using, for example, the above-mentioned Formula (1), and registers the color correspondence relationship in the color conversion database 31.

In step S22, the processing order decision unit 33 decides the processing order indicating the order of the color correspondence relationship to be the determination processing target in the color correspondence relationship determination unit 34 according to, for example, the degree of reliability of each color correspondence relationship for the color correspondence relationship specified by the alignment unit 22 in step S12 of Fig. 5 and the color correspondence relationship generated by the color interpolation unit 32 in step S21. Then, the processing order decision unit 33 notifies the color correspondence relationship determination unit 34 of the decided processing order. Furthermore, the processing order decision unit 33 registers the reliability of the color correspondence relationship in the color conversion database 31 via the color interpolation unit 32.

In step S23, the color correspondence relationship determination unit 34 acquires, as a determination processing target, a color correspondence relationship in which the determined label is undetermined among the color correspondence relationships registered in the color conversion database 31 according to the processing order notified from the processing order decision unit 33 in step S22.

In step S24, the color correspondence relationship determination unit 34 acquires the available color correspondence relationship as described above from the color correspondence relationships in which the determined labels are determined among the color correspondence relationships registered in the color conversion database 31.

In step S25, the color correspondence relationship determination unit 34 judges whether the color correspondence relationship of the determination processing target is normal color conversion or falsification. As described above, the color correspondence relationship determination unit 34 judges that the color correspondence relationship of the determination processing target is the normal color conversion in a case where the above-mentioned Formula (2) is satisfied, and judges that the color correspondence relationship of the determination processing target is falsification in a case where the above-mentioned Formula (2) is not satisfied.

In step S25, in a case where the color correspondence relationship determination unit 34 judges that the color correspondence relationship of the determination processing target is the normal color conversion, the processing proceeds to step S26. In step S26, the color correspondence relationship determination unit 34 updates the determined label of the color correspondence relationship of the determination processing target as determined.

On the other hand, in step S25, in a case where the color correspondence relationship determination unit 34 judges that the color correspondence relationship of the determination processing target is falsification, the processing proceeds to step S27. In step S27, the color correspondence relationship determination unit 34 deletes the color correspondence relationship of the determination processing target from the color conversion database 31.

After the processing of step S26 or S27, the processing proceeds to step S28, and the color correspondence relationship determination unit 34 judges whether or not a color correspondence relationship in which a determined label is undetermined remains in the color conversion database 31.

In step S28, in a case where the color correspondence relationship determination unit 34 judges that the color correspondence relationship in which the determined label is undetermined remains in the color conversion database 31, the processing returns to step S23, and similar processing is repeatedly performed according to the processing order.

On the other hand, in step S28, in a case where the color correspondence relationship determination unit 34 judges that the color correspondence relationship in which the determined label is undetermined does not remain in the color conversion database 31, the processing proceeds to step S29. That is, in this case, it is judged that all the determined labels of the color correspondence relationships registered in the color conversion database 31 have been determined, and all the color correspondence relationships are normal color conversion.

In step S29, the color conversion performing unit 35 refers to the color correspondence relationship registered in the color conversion database 31, and performs color conversion on the aligned first image supplied from the alignment unit 22 in step S11 of Fig. 5. Then, after the color conversion performing unit 35 supplies the judgement unit 24 with a color conversion trial result obtained by performing color conversion on the first image, the color conversion processing is ended.

By executing the falsification detection processing as described above, the falsification detection device 13 can more efficiently detect the presence or absence of falsification of the second image (query image) generated by performing image editing on the first image (reference image) by using the model with a high degree of freedom to be determined for each color correspondence relationship.

Meanwhile, the color correspondence relationship determination unit 34 can perform interpolation or extrapolation using the available color correspondence relationship instead of deleting the color correspondence relationship of the determination processing target judged to be falsification from the color conversion database 31 in step S27 of Fig. 6. For example, the color correspondence relationship determination unit 34 can perform interpolation or extrapolation by linear regression. Furthermore, the color correspondence relationship determination unit 34 may perform linear regression by performing weighting according to the reliability, the distance between the color xᵢ^ of the first image and the color yᵢ^ of the second image, and the like.

Then, the color correspondence relationship determination unit 34 can determine that the color correspondence relationship is the normal color conversion in a case where the following Formula (3) is satisfied using the color yᵢ^ of the second image, the color yᵢ^' of the second image obtained from the color xᵢ^ of the first image obtained by interpolation or extrapolation, a distance function dist, and a threshold th.
[Math. 3] $dist \left(\overline{{y}_{i}},\overline{{y}_{i}}′\right) < th$

Note that a Mahalanobis distance in consideration of a direction in which interpolation or extrapolation is difficult due to degeneracy can be used. Furthermore, instead of using the direct distance, a non-linear activation function such as softmax may be used.

By using this Formula (3), an upper limit of the second derivative can be given to the normal color conversion.

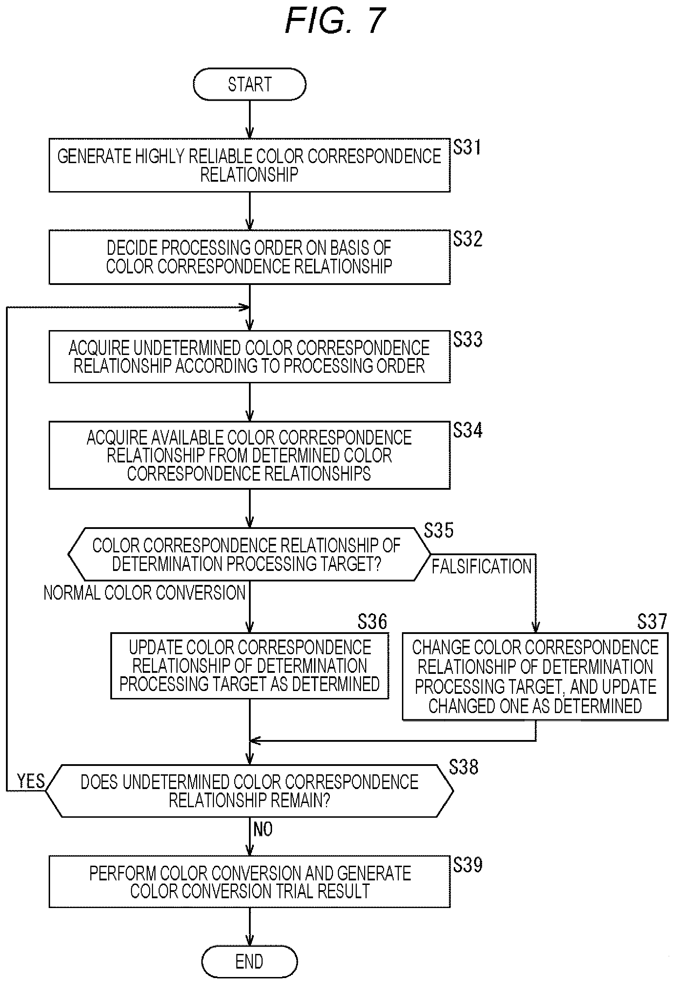

A second processing example of the color conversion processing performed in step S13 in Fig. 5 will be described with reference to a flowchart illustrated in Fig. 7.

In steps S31 to S36, processing similar to that of steps S21 to S26 of Fig. 6 is performed. Then, in step S37, the color correspondence relationship determination unit 34 changes the color correspondence relationship of the determination processing target judged to be falsification in step S35 by interpolating or extrapolating the color correspondence relationship using the available color correspondence relationship as described above, and updates the determined label of the color correspondence relationship after the change as determined.

Thereafter, in steps S38 and S39, processing similar to that in steps S28 and S29 in Fig. 6 is performed.

### <Analysis of error>

The analysis of an error in the color correspondence relationship determination unit 34 will be described.

For example, in a case where there is no quantization error, the distance dist(yᵢ^, yⱼ^) satisfies a relationship expressed by the following Formula (4) among the distance dist(yᵢ^, f(xᵢ^)), the distance dist(yⱼ^, f(xⱼ^)), and the distance dist(f(xⱼ^), f(xⱼ^)) using the unknown true color conversion function f.
[Math. 4] $dist \left(\overline{{y}_{i}}, \overline{{y}_{i}}\right) \leq dist \left(\overline{{y}_{i}}, f\left(\overline{{x}_{i}}\right)\right) + dist \left(\overline{{y}_{j}}, f\left(\overline{{x}_{j}}\right)\right) + dist \left(f\left(\overline{{x}_{i}}\right), f\left(\overline{{x}_{j}}\right)\right)$

Here, if the unknown true color conversion function f is Lipschitz continuous, there is a certain constant K, and the following Formula (5) is established between the distance dist(f(xⱼ^), f(xⱼ^)) and the distance dist (xᵢ^, xⱼ^). In fact, if the unknown true color conversion function f is a normal color conversion, the slope often has an upper limit.
[Math. 5] $dist \left(f\left(\overline{{x}_{i}}\right), f\left(\overline{{x}_{j}}\right)\right) \leq Kdist \left(\overline{{x}_{i}}, \overline{{x}_{j}}\right)$

Therefore, the color correspondence relationship determination unit 34 determines whether the color correspondence relationship is normal color conversion or falsification on the assumption that the distance dist (yᵢ^, f(xᵢ^)) and the distance dist (yⱼ^, f(xⱼ^)) are sufficiently small with respect to the right side of the above-mentioned Formula (5).

On the other hand, a case where the distance dist(yᵢ^, f(xᵢ^)) and the distance dist(yⱼ^, f(xⱼ^)) cannot be ignored will be considered. The arithmetic processing m in the color interpolation unit 32 can be interpreted as a weighted average value, and the following Formula (6) holds for the distance dist(yᵢ^, f(xᵢ^)) when xᵢ^ is calculated by calculating a weight wₖ at each point from {yₖ|k∈i} and taking the weighted average value using the weight wₖ.
[Math. 6] $dist \left(\overline{{y}_{i}}, f\left(\overline{{x}_{i}}\right)\right) = dist \left({\sum }_{k ∈ i} {w}_{k} {y}_{k} , f \left({\sum }_{k ∈ i} {w}_{k} {x}_{k}\right)\right)$

Furthermore, in a case where the unknown true color conversion function f satisfies the following properties with respect to the constant C, actually, if the unknown true color conversion function f is normal color conversion, a condition shown in the following Formula (7) is satisfied with respect to the constant C < the constant K.
[Math. 7] $dist \left({\sum }_{k ∈ i} {w}_{k} {y}_{k} , f \left({\sum }_{k ∈ i} {w}_{k} {x}_{k}\right)\right) \leq C {\sum }_{I ∈ i} {w}_{I} dist \left({x}_{I}, {\sum }_{k ∈ i} {w}_{k} {x}_{k}\right)$

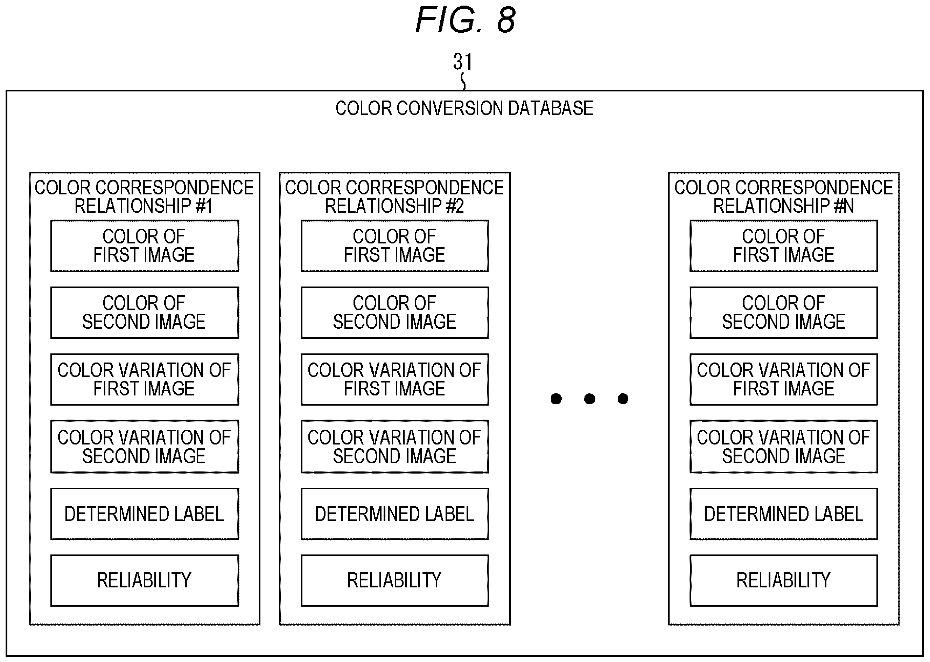

Therefore, the color interpolation unit 32 registers a value obtained by the following Formula (8) as color variation in the color conversion database 31 as illustrated in Fig. 8.
[Math. 8] ${\sum }_{I ∈ i} {w}_{I} dist \left({x}_{I}, {\sum }_{k ∈ i} {w}_{k} {x}_{k}\right)$

Then, the color interpolation unit 32 uses σ corresponding to the magnitude of the quantization error of the color yⱼ^ of the second image on the assumption that the constant C' satisfies the following Formula (9), and in a case where the following Formula (10) is satisfied, it is determined that the color correspondence relationship is normal color conversion, so that the error can be reduced.
[Math. 9] $0 \leq C ′ < C$ [Math. 10] $m \left(\left\{\left.\frac{dist \left(\overline{{y}_{i}}, \overline{{y}_{j}}\right) - C ′ {\sum }_{I ∈ i} {w}_{I} dist \left({x}_{I}, {\sum }_{k ∈ i} {w}_{k} {x}_{k}\right) - C ′ {\sum }_{I ∈ j} w {′}_{I} dist \left({x}_{I}, {\sum }_{k ∈ j} w {′}_{k} {x}_{k}\right) - σ}{dist \left(f\left(\overline{{x}_{i}}\right),f\left(\overline{{x}_{j}}\right)\right)}\right|j∈J\right\}\right) < th$

### <Modification of color conversion unit>

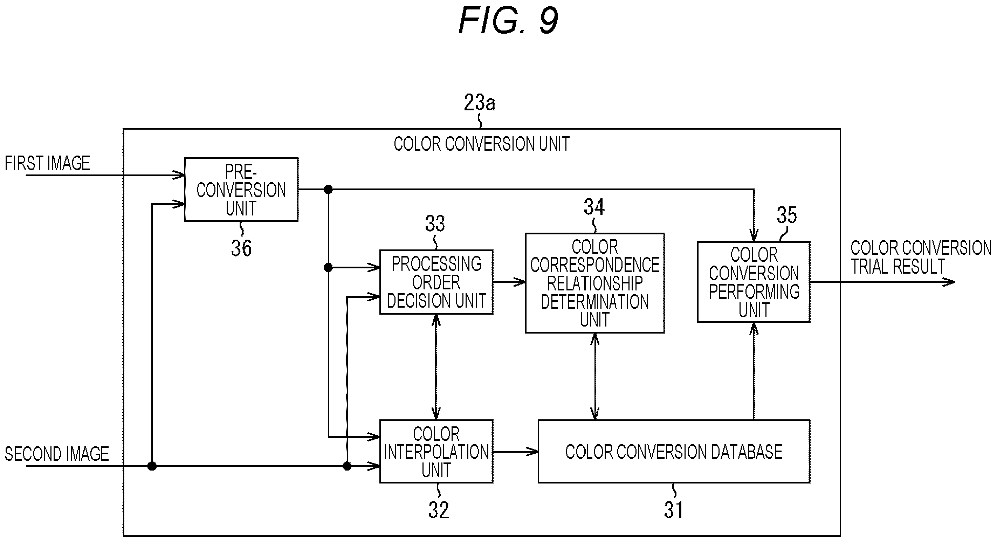

A modification of the color conversion unit 23 is described with reference to Fig. 9. Note that, in the configuration of a color conversion unit 23a illustrated in Fig. 9, components common to those of the color conversion unit 23 in Fig. 3 are denoted by the same reference signs, and a detailed description thereof will be omitted.

As illustrated in Fig. 9, similarly to the color conversion unit 23 in Fig. 3, the color conversion unit 23a includes a color conversion database 31, a color interpolation unit 32, a processing order decision unit 33, a color correspondence relationship determination unit 34, and a color conversion performing unit 35. Moreover, the color conversion unit 23a includes a pre-conversion unit 36.

The pre-conversion unit 36 performs color conversion in which application to the second image is recognized in advance or color conversion in which application to the second image can be easily estimated with a small number of parameters on the aligned first image in advance. Then, the pre-conversion unit 36 supplies the first image subjected to the color change to the color interpolation unit 32, the processing order decision unit 33, and the color conversion performing unit 35.

As described above, in the color conversion unit 23a, each processing is performed using the first image subjected to the color conversion by the pre-conversion unit 36, so that a threshold or the like used when the color correspondence relationship determination unit 34 makes a determination can be limited. As a result, the color correspondence relationship determination unit 34 can easily determine whether the color correspondence relationship is normal color conversion or falsification.

### <Numerical examples of color conversion processing>

Numerical examples of the color conversion processing performed by the color conversion unit 23 will be described with reference to Figs. 10 to 15.

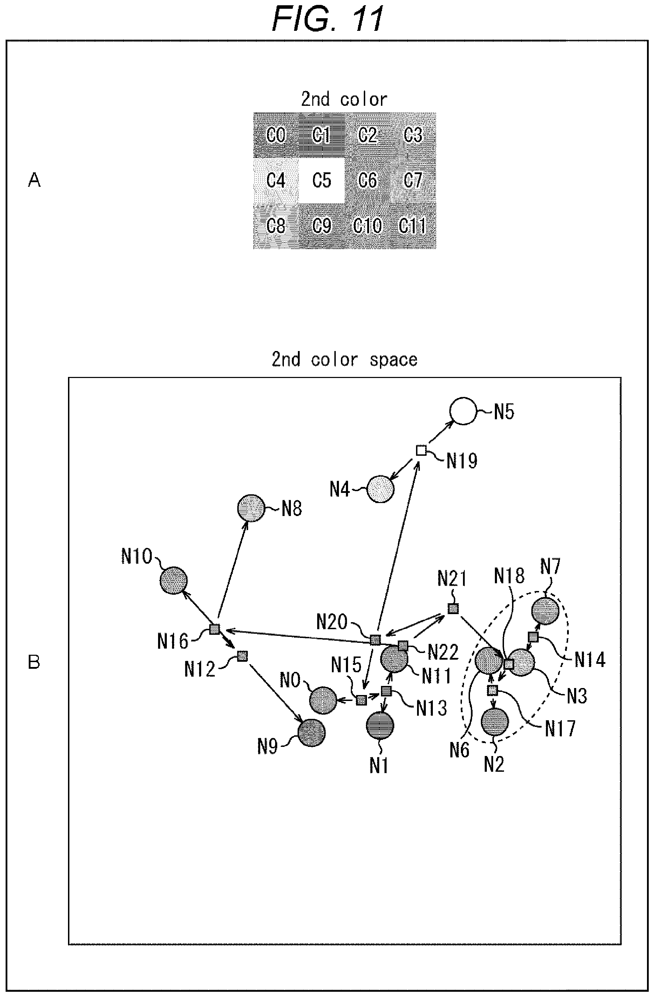

Here, as illustrated in A of Fig. 10, a first image in which colors C0 to C11 are colored in 12 regions divided into 4×3 will be described as an example. Furthermore, it is assumed that a second image illustrated in A of Fig. 11 is generated by performing image editing (normal color conversion) for adjusting brightness on the entire first image and performing image editing for falsification so that the color C9 becomes a color different from that of the first image (For example, the color C9 of the first image is blue, whereas the color C9 of the first image is purple.).

B of Fig. 10 illustrates a color space corresponding to the first image illustrated in A of Fig. 10. For example, in this color space, nodes N0 to N11 represented by circles represent colors C0 to C11 of the first image. Similarly, B of Fig. 11 illustrates a color space corresponding to the second image illustrated in A of Fig. 11. For example, in this color space, nodes N0 to N11 represented by circles represent colors C0 to C11 of the second image. Note that the color space corresponding to the first image illustrated in B of Fig. 10 and the color space corresponding to the second image illustrated in B of Fig. 11 are obtained by two-dimensionally projecting and displaying a three-dimensional YCrCb color space.

First, the color interpolation unit 32 performs agglomerative clustering in which elements at close distances are combined in the color space corresponding to the first image, and performs processing of assigning a number to a cluster obtained so that the higher the hierarchy, the larger the number.

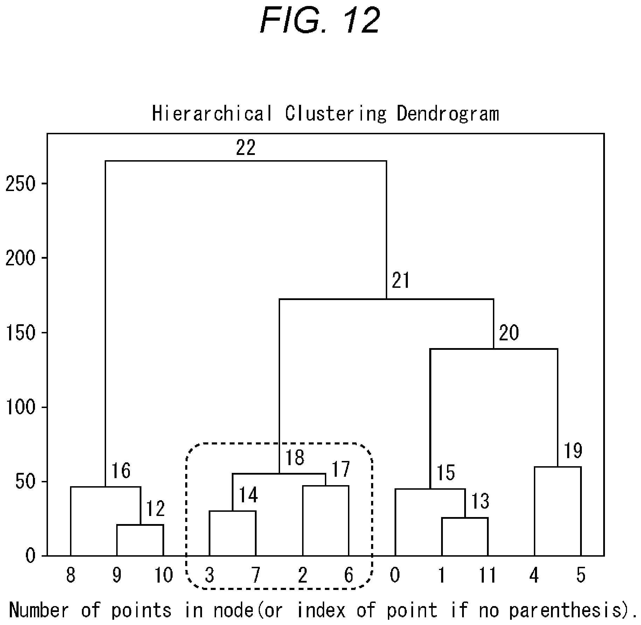

Fig. 12 illustrates a dendrogram showing a correspondence between cluster numbers and color numbers. A directed graph corresponding to the dendrogram tree is represented by arrows in the color space corresponding to the first image (B of Fig. 10) and the color space corresponding to the second image (B of Fig. 11). At this time, the color interpolation unit 32 can perform color interpolation by acquiring median values in the color space corresponding to the first image and the color space corresponding to the second image for a plurality of colors included in the cluster. For example, the median value is obtained for each channel of YCrCb.

For example, in the color space illustrated in B of Fig. 10, nodes N12 to N22 represented by squares represent colors of the first image having the highly reliable color correspondence relationship generated by the color interpolation unit 32, and correspond to clusters 12 to 22 as illustrated in Fig. 12. Similarly, in the color space illustrated in B of Fig. 11, nodes N12 to N22 represented by squares represent colors of the second image having the highly reliable color correspondence relationship generated by the color interpolation unit 32, and correspond to clusters 12 to 22 as illustrated in Fig. 12.

Here, the cluster 18 corresponding to the node N18 will be described. As surrounded by a broken line in Fig. 12, color C2, color C3, color C6, and color C7 belong to cluster 18 corresponding to node N18.

Therefore, the color interpolation unit 32 can generate the color correspondence relationship to be color-interpolated by acquiring the median value for each channel of YCrCb with respect to the color C2, the color C3, the color C6, and the color C7. That is, since the distance between the node N2 and the node N6 is short in the color space, the color interpolation unit 32 acquires the median value for each channel of YCrCb with respect to the color C2 and the color C6, thereby generating the color correspondence relationship of the cluster 17 to be color-interpolated as the node N17. Moreover, since the distance between the node N3 and the node N7 is short in the color space, the color interpolation unit 32 acquires the median value for each channel of YCrCb with respect to the color C3 and the color C7, thereby generating the color correspondence relationship of the cluster 14 to be color-interpolated as the node N14. Similarly, the color interpolation unit 32 generates the color correspondence relationship of the cluster 18 to be color-interpolated as the node N18 with respect to the color correspondence relationship of the cluster 14 and the color correspondence relationship of the cluster 17.

By performing such processing on all the clusters 11 to 22, the color interpolation unit 32 can generate 11 color correspondence relationships to be color-interpolated as the nodes N11 to 22. Then, the color interpolation unit 32 registers these determined labels of the color correspondence relationships in the color conversion database 31 as undetermined labels.

Next, the processing order decision unit 33 decides the reliability of the color correspondence relationship generated by the color interpolation unit 32. For example, a cluster number can be used as the reliability on the basis of the fact that a larger set is averaged and thus is less likely to be affected by falsification because the influence of falsification is weakened.

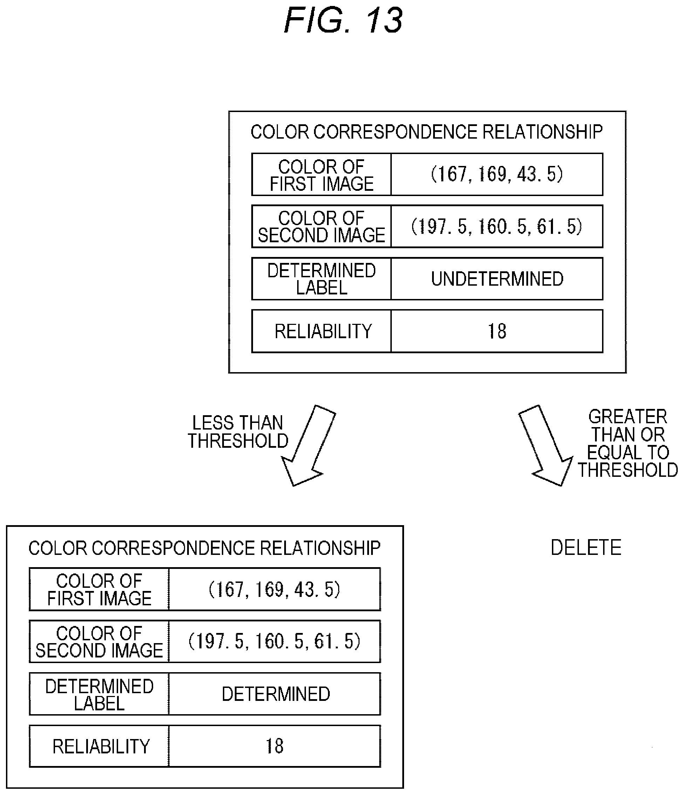

Fig. 13 illustrates an example of data registered in the color correspondence relationship of the cluster 18 corresponding to the node N18. For the color of the first image and the color of the second image, the values of the YCrCb channel are expressed in this order. When the color correspondence relationship is registered in the color conversion database 31, the determined label is to be undetermined. Then, as will be described later, in a case where the value obtained by the color correspondence relationship determination unit 34 is less than a threshold, the color correspondence relationship is updated as the determined label has been determined, and in a case where the value obtained by the color correspondence relationship determination unit 34 is greater than or equal to the threshold, the color correspondence relationship is deleted.

Furthermore, the processing order decision unit 33 also decides the reliability for the color correspondence relationship including the color of the first image and the color of the second image. As the reliability of the color correspondence relationship including the color of the first image and the color of the second image, a value smaller than the number of the cluster of the color correspondence relationship generated by the color interpolation unit 32 can be used. That is, the size of the set of the color of the first image and the color of the second image corresponds to 1, and is smaller than the size of the cluster.

The color correspondence relationship determination unit 34 determines whether the color correspondence relationship is normal color conversion or falsification.

For example, an example of determining the color correspondence relationship of the cluster 18 in a case where it is judged that all the color correspondence relationships of the cluster 22, the cluster 21, the cluster 20, and the cluster 19 are normal color conversion will be described. Here, it is assumed that the color of the first image in the cluster 22 is x₂₂^, the color of the first image in the cluster 21 is x₂₁^, the color of the first image in the cluster 20 is x₂₀^, the color of the first image in the cluster 19 is x₁₉^, the color of the second image in the cluster 22 is y₂₂^, the color of the second image in the cluster 21 is y₂₁^, the color of the second image in the cluster 20 is y₂₀^, and the color of the second image in the cluster 19 is y₁₉^.

At this point, the color belonging to the cluster in the higher hierarchy is set to the available color using the cluster hierarchy information. That is, the colors belonging to the higher hierarchy are similar in color and are easy to use for determination because of high reliability. As illustrated in Fig. 12, since the higher hierarchies of the cluster 18 are the cluster 21 and the cluster 22, J = {21,22}. Furthermore, the Euclidean distance in the YCrCb space is used as the distance, and the calculation for obtaining the maximum value is performed by the calculation processing m, σ corresponding to the magnitude of the quantization error of the color yⱼ^ of the second image is set to 0, and the threshold is set to 2.

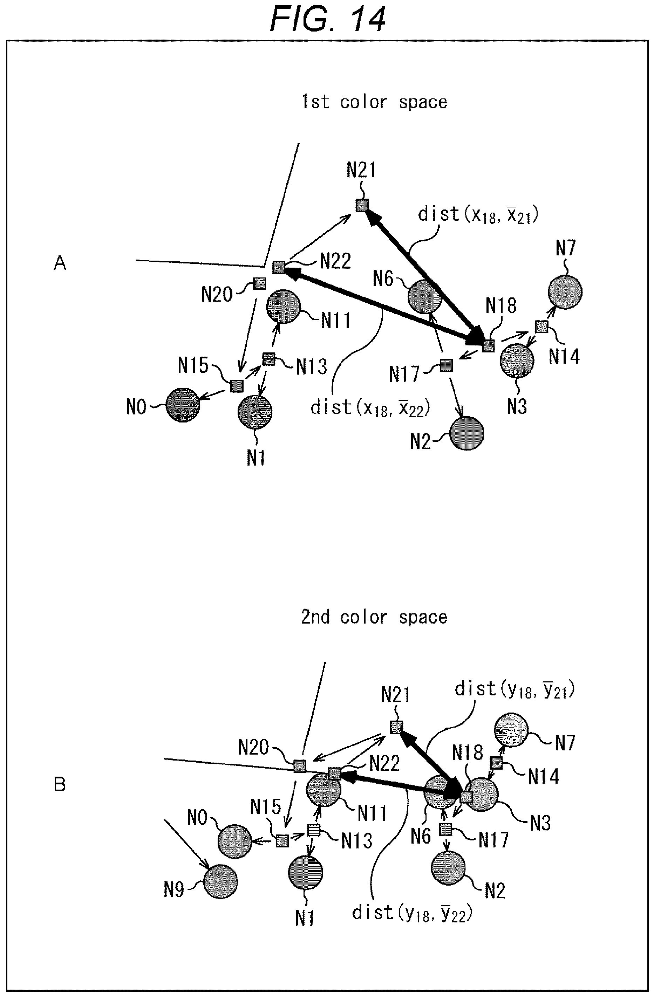

For example, the distance dist (x₁₈, x₂₁^) and the distance dist(x₁₈, x₂₂^) in the color space corresponding to the first image are represented as thick line arrows illustrated in A of Fig. 14. Similarly, the distance dist(y₁₈, y₂₁^) and the distance dist (y₁₈, y₂₂^) in the color space corresponding to the second image are represented as thick line arrows illustrated in B of Fig. 14.

Then, when the color of the first image in the cluster 18 is x₁₈ = (167,169,43.5), the color of the first image in the cluster 20 is x₂₀^ = (134,114,103), the color of the first image in the cluster 22 is x₂₂^ = (140,121,101), the color of the second image in the cluster 18 is y₁₈ = (197.5,160.5,61.5), the color of the second image in the cluster 20 is y₂₀^ = (172,112,99), and the color of the second image in the cluster 22 is y₂₂^ = (176,135,97.5), the distance dist and Formula (2) mentioned above have a relationship as shown in the following Formula (11).
[Math. 11] $\left\{\begin{matrix}\frac{dist \left({y}_{18}, {\overline{y}}_{20}\right)}{dist \left({x}_{18}, {\overline{x}}_{20}\right)} = 0 . 7589 \\ \frac{dist \left({y}_{18}, {\overline{y}}_{22}\right)}{dist \left({x}_{18}, {\overline{x}}_{22}\right)} = 0 . 6164 \\ m \left(\left\{\left|dist\left({y}_{i}, \overline{{y}_{j}}\right)/dist\left({x}_{i}, \overline{{x}_{j}}\right)\right|\left|j∈J\right.\right\}\right) = 0 . 7589 < 2\end{matrix}\right.$

As described above, in a case where the obtained value is less than 2 which is the threshold, the color correspondence relationship determination unit 34 re-registers the determined label of the color correspondence relationship in the color conversion database 31 as determined.

Furthermore, an example of determining the color correspondence relationship of the color C9 in a case where it is judged that all the color correspondence relationships from the cluster 22 to the cluster 12 are normal color conversion will be described. Here, it is assumed that the color of the first image in the cluster 22 is x₂₂^, the color of the first image in the cluster 16 is x₁₆^, the color of the first image in the cluster 12 is x₁₂^, the color of the second image in the cluster 22 is y₂₂^, the color of the second image in the cluster 16 is y₁₆^, and the color of the second image in the cluster 12 is y₁₂^.

At this point, the color belonging to the cluster in the higher hierarchy is set to the available color using the cluster hierarchy information. That is, the colors belonging to the higher hierarchy are similar in color and are easy to use for determination because of high reliability. As illustrated in Fig. 12, since the higher hierarchies of the color C9 are the cluster 12, the cluster 16, and the cluster 22, J = {12,16,22}. Furthermore, the Euclidean distance in the YCrCb space is used as the distance, and the calculation for obtaining the maximum value is performed by the calculation processing m, σ corresponding to the magnitude of the quantization error of the color yⱼ^ of the second image is set to 0, and the threshold is set to 2.

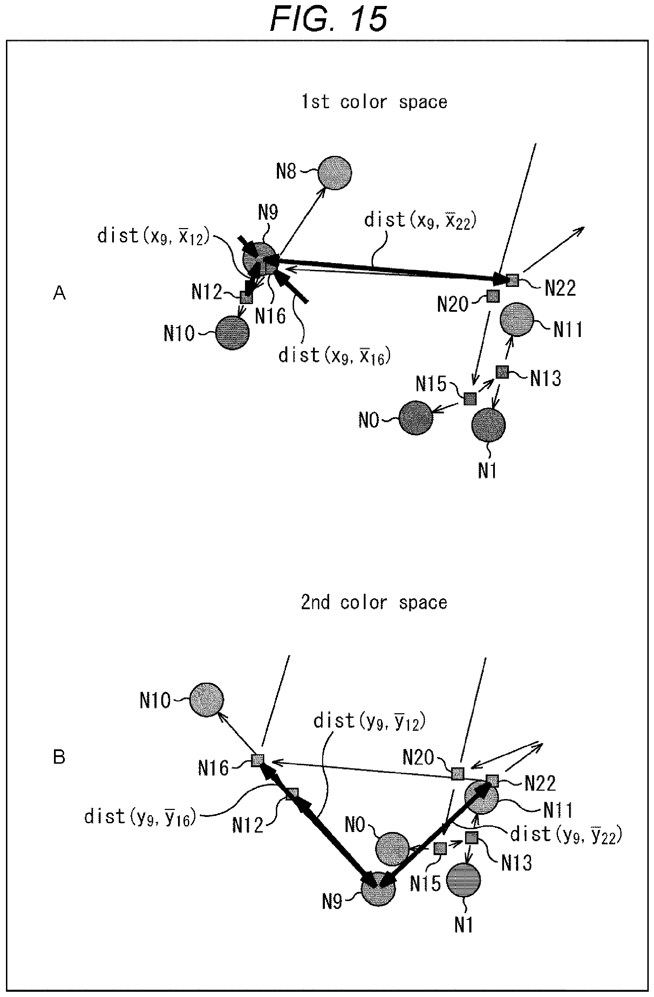

For example, the distance dist(x₉, x₁₂^), the distance dist(x₉, x₁₆^), and the distance dist(x₉, x₂₂^) in the color space corresponding to the first image are represented as thick line arrows illustrated in A of Fig. 15. Similarly, the distance dist(y₉, y₁₂^), the distance dist(y₉, y₁₆^), and the distance dist(y₉, y₂₂^) in the color space corresponding to the second image are represented as thick line arrows illustrated in B of Fig. 15.

Then, when the color of the first image in the color C9 x₉ = (93,92,173), the color of the first image in the cluster 12 x₁₂^ = (84,87.5,176), the color of the first image in the cluster 16 x₁₆^ = (93,92,173), the color of the first image in the cluster 22 x₂₂^ = (140,121,101), the color of the second image in the color C9 y₉= (131,160,139), the color of the second image in the cluster 12 y₁₂^ = (131.5,125,161.5), the color of the second image in the cluster 16 y₁₆^ = (132,102,166), and the color of the second image in the cluster 22 y₂₂^ = (176,135,97.5), the distance dist and Formula (2) mentioned above have a relationship as shown in the following Formula (12).
[Math. 12] $\left\{\begin{matrix}\frac{dist \left({y}_{9}, {\overline{y}}_{12}\right)}{dist \left({x}_{9}, {\overline{x}}_{12}\right)} = 3 . 9630 \\ \begin{matrix}\frac{dist \left({y}_{9}, {\overline{y}}_{17}\right)}{dist \left({x}_{9}, {\overline{x}}_{17}\right)} = 7 . 1094 \\ \frac{dist \left({y}_{9}, {\overline{y}}_{22}\right)}{dist \left({x}_{9}, {\overline{x}}_{22}\right)} = 0 . 7034\end{matrix} \\ m \left(\left\{\left|dist\left({y}_{i}, \overline{{y}_{j}}\right)/dist\left({x}_{i}, \overline{{x}_{j}}\right)\right|\left|j∈J\right.\right\}\right) = 7 . 1094 \geq 2\end{matrix}\right.$

As described above, in a case where the obtained value is 2 or more which is the threshold, the color correspondence relationship determination unit 34 deletes the color correspondence relationship from the color conversion database 31. That is, it can be determined that the color correspondence relationship corresponding to the color C9 is included in the falsification region, and by deleting the color correspondence relationship, the color conversion database 31 can be updated so as not to be affected by the falsification.

Then, by repeatedly performing similar processing on the undetermined color correspondence relationship registered in the color conversion database 31, only the color correspondence relationship determined not to be falsification remains, and the color correspondence relationship determined to be falsification can be deleted from the color conversion database 31.

### <Application examples of falsification detection system>

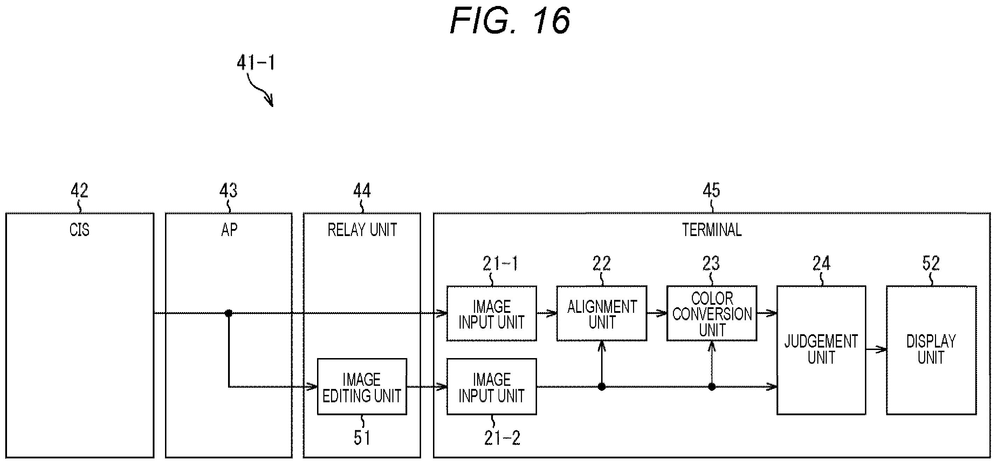

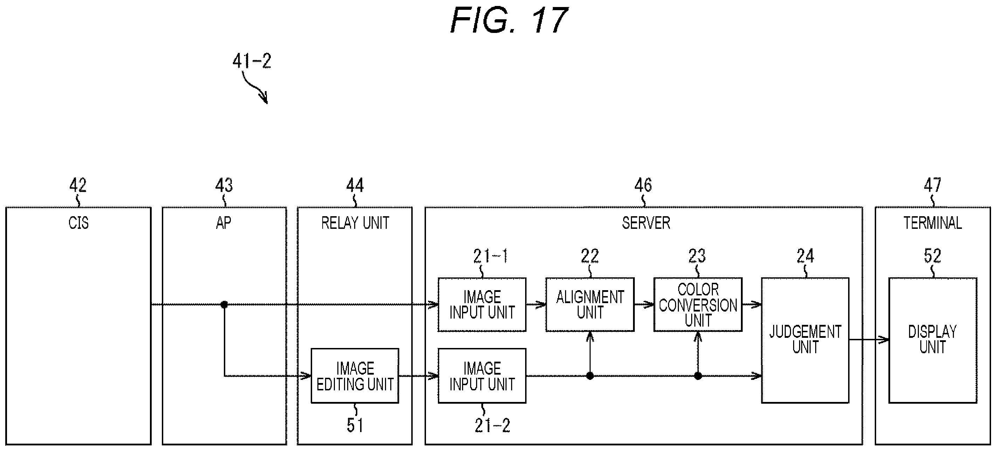

Application examples of a falsification detection system to which the falsification detection device 13 of Fig. 2 as the first embodiment is applied will be described with reference to Figs. 16 and 17.

Fig. 16 is a block diagram illustrating an example of a falsification detection system 41-1 which is a first application example.

As illustrated in Fig. 16, the falsification detection system 41-1 includes a CMOS image sensor 42, an application processor 43, a relay unit 44, and a terminal 45.

The CMOS image sensor 42 performs imaging by receiving light on a sensor surface on which a plurality of pixels is arranged in an array, and outputs an image that is digital information obtained by digitally converting a pixel signal according to the amount of the received light.

The application processor 43 acquires two images by duplicating the image output from the CMOS image sensor 42, and transmits each image through a different path. For example, as described above with reference to A of Fig. 1, the application processor 43 records one image in the main body of the image data, and outputs the image data recorded in the metadata (For example, a header, Exif data, or the like) of the image data with the other image as a reference image.

The relay unit 44 includes an image editing unit 51 that performs image editing (normal color conversion or falsification) on an image recorded in the main body of the image data output from the application processor 43, and outputs an image generated by performing the image editing to the terminal 45 as a query image. On the other hand, the relay unit 44 relays the reference image recorded in the metadata of the image data output from the application processor 43 as it is and outputs the reference image to the terminal 45. Note that a digital signature can be used to protect the reference image. For example, the relay unit 44 can include a plurality of servers or a plurality of terminals that communicates with each other.

The terminal 45 includes blocks constituting the falsification detection device 13 of Fig. 2, that is, image input units 21-1 and 21-2, an alignment unit 22, a color conversion unit 23, and a judgement unit 24, and further includes a display unit 52. That is, the terminal 45 performs the falsification detection of the falsification detection device 13, and the display unit 52 displays the judgement result of judging whether the presence or absence of falsification in the second image.

As described above, in the falsification detection system 41-1, the terminal 45 that has acquired the first image (reference image) and the second image (query image) can execute the falsification detection processing for judging whether the presence or absence of falsification in the second image and display the judgement result.

Fig. 17 is a block diagram illustrating an example of a falsification detection system 41-2 which is a second application example. Note that, in the falsification detection system 41-2 illustrated in Fig. 17, configurations common to those of the falsification detection system 41-1 in Fig. 16 are denoted by the same reference signs, and detailed description thereof will be omitted.

As illustrated in Fig. 17, the falsification detection system 41-2 has a configuration common to the falsification detection system 41-1 in Fig. 16 in including a CMOS image sensor 42, an application processor 43, and a relay unit 44. Then, the falsification detection system 41-2 has a configuration different from that of the falsification detection system 41-1 in Fig. 16 in including a server 46 and a terminal 47.

The server 46 includes blocks constituting the falsification detection device 13 of Fig. 2, that is, image input units 21-1 and 21-2, an alignment unit 22, a color conversion unit 23, and a judgement unit 24. That is, the falsification detection of the falsification detection device 13 is performed in the server 46, and the judgement result output from the judgement unit 24 is transmitted to the terminal 47.

The terminal 47 receives the judgement result transmitted from the server 46, and displays on the display unit 52 the judgement result of judging whether the presence or absence of falsification in the second image.

As described above, the falsification detection system 41-2 can reduce the amount of calculation in the terminal 45 by executing the falsification detection processing for judging whether the presence or absence of falsification in the second image in the server 46. Moreover, in the falsification detection system 41-2, the server 46 executes the falsification detection processing in advance when acquiring the first image (reference image) and the second image (query image), whereby the time required to transmit the judgement result to the terminal 47 can be shortened, and the latency can be reduced.

### <Second configuration example of falsification detection device>

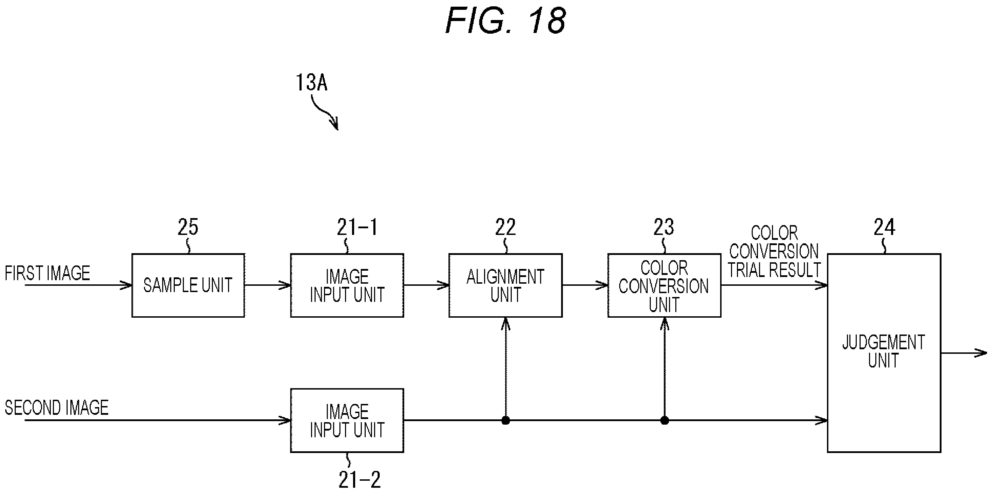

Fig. 18 is a block diagram illustrating a configuration example of a second embodiment of a falsification detection device to which the present technology is applied. Note that, in a falsification detection device 13A illustrated in Fig. 18, configurations common to those of the falsification detection device 13 in Fig. 2 will be denoted by the same reference signs, and detailed description thereof will be omitted.

As illustrated in Fig. 18, the falsification detection device 13A has a configuration common to the falsification detection device 13 of Fig. 2 in including image input units 21-1 and 21-2, an alignment unit 22, a color conversion unit 23, and a judgement unit 24. Then, the falsification detection device 13A has a configuration different from that of the falsification detection device 13 in Fig. 2 in including a sample unit 25.

The sample unit 25 samples the reference image input to the falsification detection device 13A to reduce the data amount and supplies the reference image to the image input unit 21-1, and the image input unit 21-1 acquires the sampled reference image as the first image. For example, the sample unit 25 can sample the reference image by dividing a plurality of pixels constituting the reference image into blocks and deciding a representative color for each block. As the representative color for each block, an average value, a median value, a maximum value, a minimum value, or the like of pixels in each block can be adopted, or a color of specific coordinates in each block can be adopted. Furthermore, the sample unit 25 may sample the reference image by extracting a low-frequency coefficient by an orthogonal transform such as a two-dimensional Fourier transform, a two-dimensional cosine transform, or a two-dimensional wavelet transform.

Note that, when the sample unit 25 samples the reference image, the color of the first image may be smaller than the color of the second image. In this case, by using the same color of the first image in a plurality of color correspondence relationships, the number of color correspondence relationships corresponding to the number of colors of the second image can be secured. Furthermore, in a case where the sample unit 25 samples the reference image to obtain a format different from that of the image including the pixels, the image can be converted into an image including the pixels before the alignment by the alignment unit 22 is performed.

The falsification detection device 13A configured as described above can reduce the amount of data to be communicated, the amount of data stored in the server, and the like by reducing the amount of data of the first image.

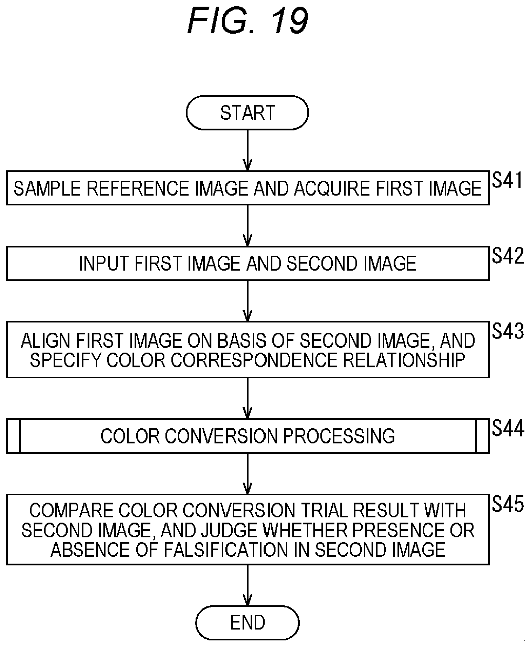

Falsification detection processing executed in the falsification detection device 13A will be described with reference to a flowchart illustrated in Fig. 19.

For example, when the reference image and the query image are input to the falsification detection device 13, the falsification detection processing is started. In step S41, the sample unit 25 samples the reference image and supplies the reference image to the image input unit 21-1, and the image input unit 21-1 acquires the sampled reference image as the first image.

Thereafter, in steps S42 to S45, processing similar to that in steps S11 to S14 of Fig. 5 is performed.

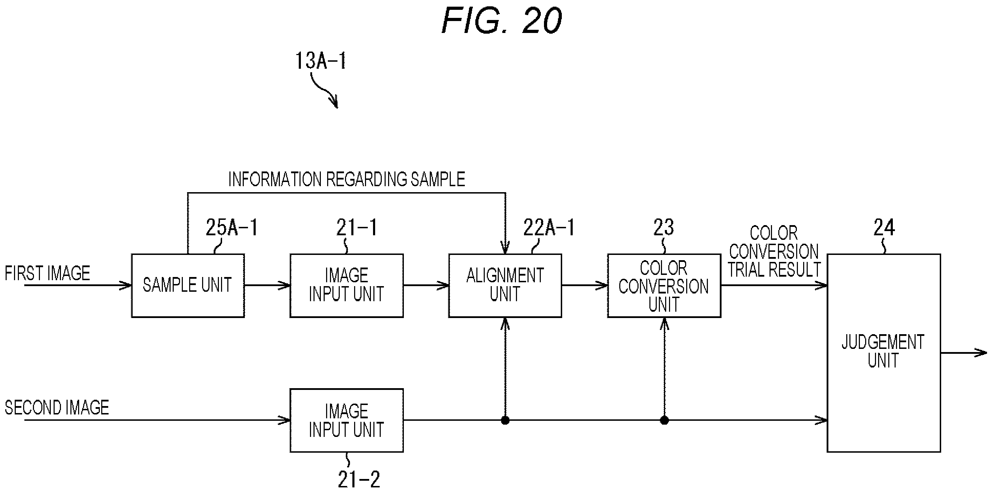

Fig. 20 is a block diagram illustrating a configuration example of a first modification of the falsification detection device 13A. Note that, in a falsification detection device 13A-1 illustrated in Fig. 20, configurations common to those of the falsification detection device 13A in Fig. 18 are denoted by the same reference signs, and detailed description thereof will be omitted.

As illustrated in Fig. 20, the falsification detection device 13A-1 has a configuration common to the falsification detection device 13A in Fig. 18 in including image input units 21-1 and 21-2, a color conversion unit 23, and a judgement unit 24. Then, the falsification detection device 13A-1 has a configuration different from that of the falsification detection device 13A in Fig. 18 in including a sample unit 25A-1 and an alignment unit 22A-1.

Similarly to the sample unit 25 in Fig. 18, the sample unit 25A-1 samples the reference image input to the falsification detection device 13A-1 to reduce the data amount, and supplies the reduced data amount to the image input unit 21-1.

Moreover, the sample unit 25A-1 can dynamically decide the size of the block when the reference image is sampled. For example, the sample unit 25A-1 may dynamically set the size of the block according to the complexity of the texture of the image, and sets the block at the place where the complexity of the texture of the image is high to be small, and sets the block at the place where the complexity of the texture of the image is low to be large. Note that the complexity of the texture is decided by dispersion, maximum deviation, or the like of colors in the block. Then, the sample unit 25A-1 supplies information indicating the dynamically decided block size to the alignment unit 22A-1 as information regarding a sample.

Furthermore, in a case where a color of specific coordinates in each block is adopted as a representative color for each block and the coordinates are dynamically decided for each block, the sample unit 25A-1 supplies information indicating coordinates specifying the representative color of each block to the alignment unit 22A-1 as information regarding the sample. For example, the sample unit 25A-1 can decide coordinates for specifying a representative color of a block so as not to be greatly deviated from the average of colors in the block.

Furthermore, the sample unit 25A-1 samples the reference image by extracting a low-frequency coefficient by an orthogonal transform such as a two-dimensional Fourier transform, a two-dimensional cosine transform, or a two-dimensional wavelet transform, and in a case of selecting the coefficient for each image, supplies an index of the selected coefficient to the alignment unit 22A-1 as information regarding the sample. For example, the sample unit 25A-1 can select a coefficient according to a specific frequency pattern included in the image.

In a case where the sample unit 25 samples the reference image to obtain a format different from that of the image including the pixels, the alignment unit 22A-1 can convert the reference image into the image including the pixels before performing alignment on the first image using the information regarding the sample. That is, the alignment unit 22A-1 can align the first image after converting the first image using the information regarding the sample.

For example, by dynamically sampling the reference image in the sample unit 25A-1, the falsification detection device 13A-1 configured as described above can reduce the data amount of the first image while suppressing the influence due to the lack of information in consideration of a portion where the error in color conversion (for example, a portion where the texture of the image is complicated) is likely to occur.

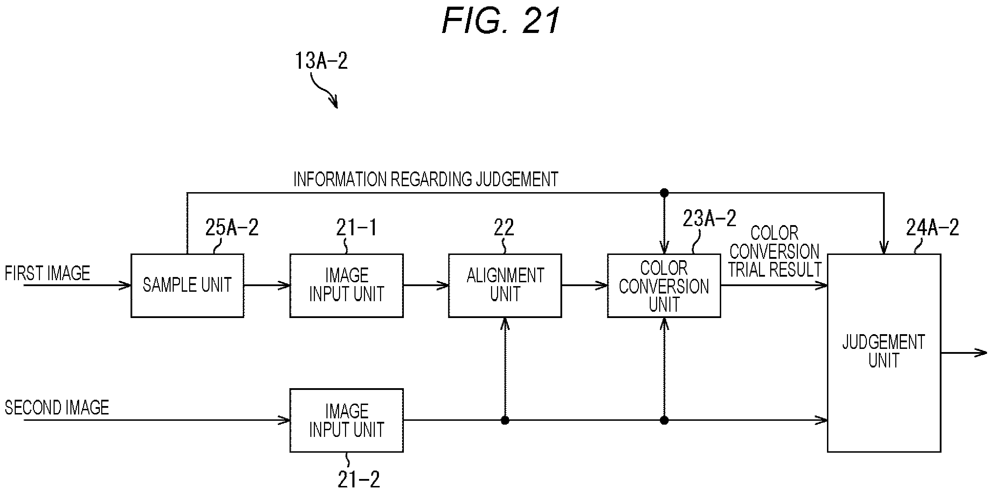

Fig. 21 is a block diagram illustrating a configuration example of a second modification of the falsification detection device 13A. Note that, in a falsification detection device 13A-2 illustrated in Fig. 21, configurations common to those of the falsification detection device 13A in Fig. 18 are denoted by the same reference signs, and detailed description thereof will be omitted.

As illustrated in Fig. 21, the falsification detection device 13A-2 has a configuration common to the falsification detection device 13A in Fig. 18 in including image input units 21-1 and 21-2 and an alignment unit 22. Then, the falsification detection device 13A-2 has a configuration different from that of the falsification detection device 13A in Fig. 18 in including a sample unit 25A-2, a color conversion unit 23A-2, and a judgement unit 24A-2.

Similarly to the sample unit 25 in Fig. 18, the sample unit 25A-2 samples the reference image input to the falsification detection device 13A-2 to reduce the data amount, and supplies the reduced data amount to the image input unit 21-1. At this time, the sample unit 25A-2 generates information regarding judgement from information that has not been sampled, and supplies the information to the color conversion unit 23A-2 and the judgement unit 24A-2. For example, the sample unit 25A-2 can supply information regarding complexity of texture to the color conversion unit 23A-2 and the judgement unit 24A-2 as information regarding judgement.

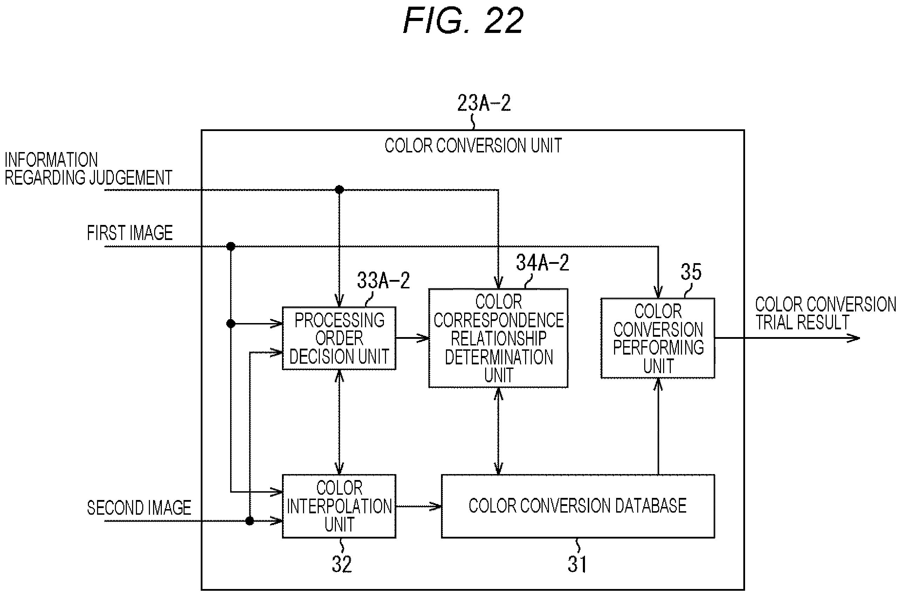

In a color conversion unit 23A-2, as illustrated in Fig. 22, the information regarding judgement supplied from the sample unit 25A-2 is input to a processing order decision unit 33A-2 and a color correspondence relationship determination unit 34A-2.

The processing order decision unit 33A-2 can decide the reliability using the information regarding judgement. For example, the processing order decision unit 33A-2 may decide the reliability such that the higher the complexity of the texture, the lower the reliability, and the lower the complexity of the texture, the higher the reliability.

The color correspondence relationship determination unit 34A-2 can decide the threshold used in Formula (2) mentioned above using the information regarding judgement. For example, the color correspondence relationship determination unit 34A-2 may decide the threshold such that the higher the complexity of the texture, the higher the threshold, and the lower the complexity of the texture, the lower the threshold. Similarly, the color correspondence relationship determination unit 34A-2 can decide the threshold used in the above-mentioned Formula (3) or (10) using the information regarding judgement.

The judgement unit 24A-2 can decide a threshold for judging whether the presence or absence of falsification in the second image by using the information regarding judgement. For example, the judgement unit 24A-2 may decide the threshold such that the higher the complexity of the texture, the higher the threshold, and the lower the complexity of the texture, the lower the threshold.

In the falsification detection device 13A-2 configured as described above, for example, the sample unit 25A-2 generates the information regarding judgement from the information that has not been sampled, and thus, it is possible to reduce the data amount of the first image while suppressing the influence due to the missing of the information in consideration of the portion where the error of the color conversion (for example, a portion where the texture of the image is complicated) is likely to occur.

### <Application examples of falsification detection system>

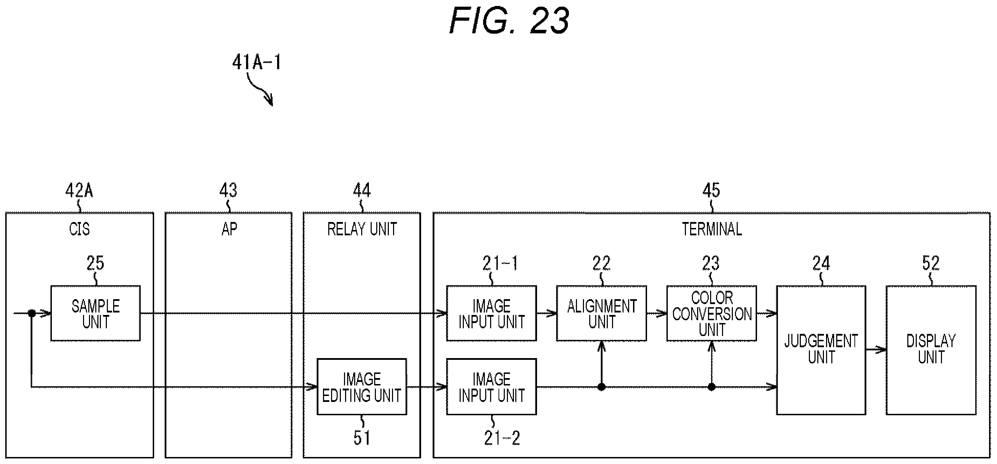

Application examples of a falsification detection system to which the falsification detection device 13A of Fig. 18 as the second embodiment is applied will be described with reference to Figs. 23 to 26.

Fig. 23 is a block diagram illustrating an example of a falsification detection system 41A-1 which is a first application example. Note that, in the falsification detection system 41A-1 illustrated in Fig. 23, configurations common to those of the falsification detection system 41-1 in Fig. 16 are denoted by the same reference signs, and detailed description thereof will be omitted.

As illustrated in Fig. 23, the falsification detection system 41A-1 has a configuration common to the falsification detection system 41-1 in Fig. 16 in including an application processor 43, a relay unit 44, and a terminal 45. The falsification detection system 41A-1 is different from the falsification detection system 41-1 of Fig. 16 in that a CMOS image sensor 42A includes a sample unit 25.

That is, the falsification detection system 41A-1 has a configuration in which the terminal 45 includes image input units 21-1 and 21-2, an alignment unit 22, a color conversion unit 23, and a judgement unit 24, and the CMOS image sensor 42A includes the sample unit 25, among the blocks constituting the falsification detection device 13A in Fig. 18.

As described above, in the falsification detection system 41A-1, it is possible to transmit the first image (reference image) and the second image (query image) after reducing the data amount of the reference image by performing the sample in the CMOS image sensor 42A.

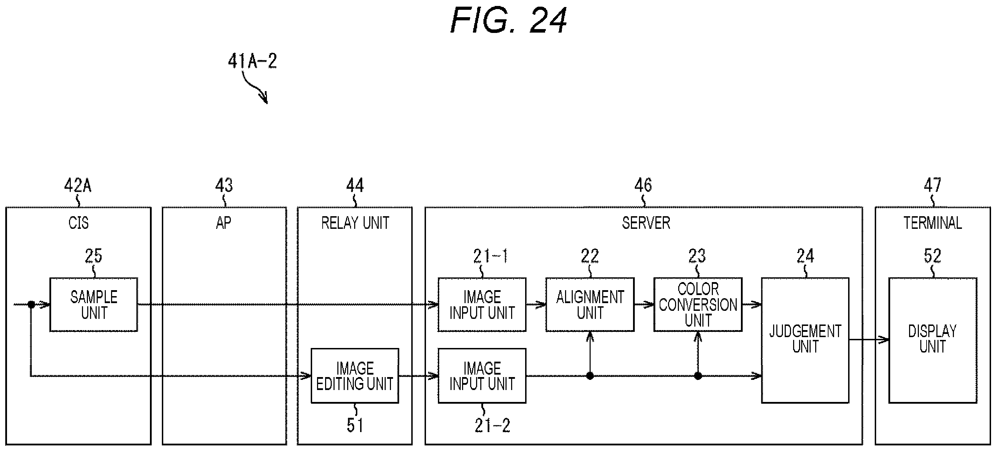

Fig. 24 is a block diagram illustrating an example of a falsification detection system 41A-2 which is a second application example. Note that, in the falsification detection system 41A-2 illustrated in Fig. 24, configurations common to those of the falsification detection system 41-2 in Fig. 17 are denoted by the same reference signs, and detailed description thereof will be omitted.

As illustrated in Fig. 24, the falsification detection system 41A-2 has a configuration common to the falsification detection system 41-2 in Fig. 17 in including an application processor 43, a relay unit 44, a server 46, and a terminal 47. The falsification detection system 41A-2 is different from the falsification detection system 41-2 of Fig. 17 in that a CMOS image sensor 42A includes a sample unit 25.

That is, in the falsification detection system 41A-2, among the blocks constituting the falsification detection device 13A in Fig. 18, the server 46 includes image input units 21-1 and 21-2, an alignment unit 22, a color conversion unit 23, and a judgement unit 24, and the CMOS image sensor 42A includes the sample unit 25.

As described above, in the falsification detection system 41A-2, it is possible to transmit the first image (reference image) and the second image (query image) after reducing the data amount of the reference image by performing the sample in the CMOS image sensor 42A. Moreover, in the falsification detection system 41A-2, similarly to the falsification detection system 41-2 in Fig. 17, the amount of calculation in the terminal 45 can be reduced, and the latency can be reduced.

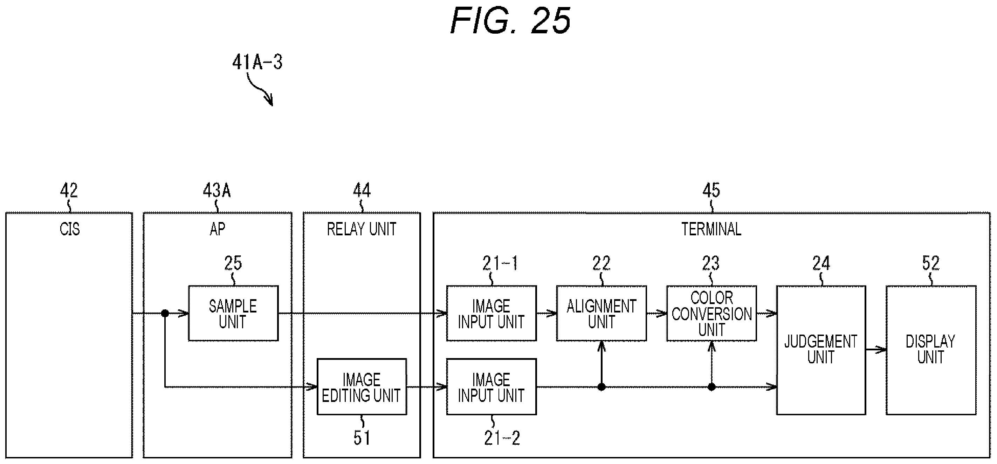

Fig. 25 is a block diagram illustrating an example of a falsification detection system 41A-3 which is a third application example. Note that, in a falsification detection system 41A-3 illustrated in Fig. 25, configurations common to those of the falsification detection system 41-1 in Fig. 16 are denoted by the same reference signs, and detailed description thereof will be omitted.

As illustrated in Fig. 25, the falsification detection system 41A-3 has a configuration common to the falsification detection system 41-1 in Fig. 16 in including a CMOS image sensor 42, a relay unit 44, and a terminal 45. Then, the falsification detection system 41A-1 is different from the falsification detection system 41-1 of Fig. 16 in that an application processor 43A includes a sample unit 25.

That is, the falsification detection system 41A-3 has a configuration in which the terminal 45 includes image input units 21-1 and 21-2, an alignment unit 22, a color conversion unit 23, and a judgement unit 24, and the application processor 43A includes the sample unit 25, among the blocks constituting the falsification detection device 13A in Fig. 18.

As described above, in the falsification detection system 41A-3, after reducing the data amount of the reference image by performing the sample in the application processor 43A, the first image (reference image) and the second image (query image) can be transmitted through different paths. As a result, for example, the amount of communication data between the CMOS image sensor 42 and the application processor 43A can be reduced.

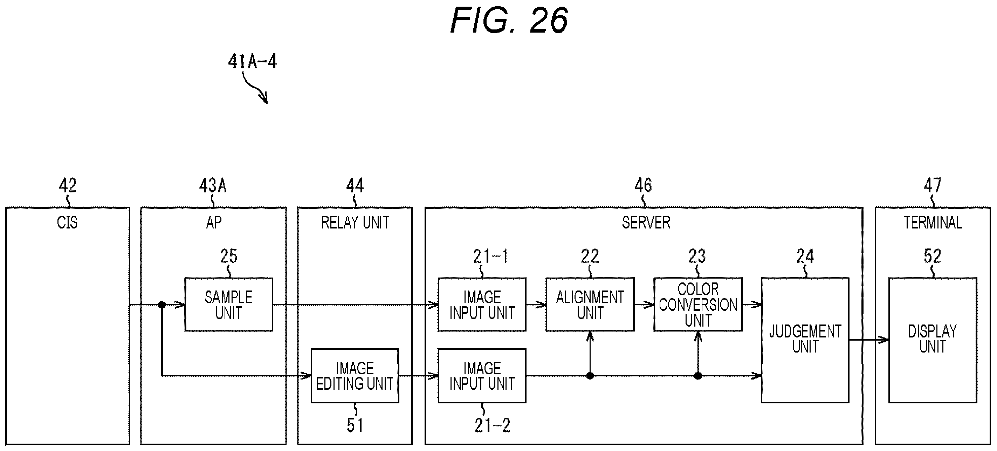

Fig. 26 is a block diagram illustrating an example of a falsification detection system 41A-4 which is a fourth application example. Note that, in the falsification detection system 41A-4 illustrated in Fig. 26, configurations common to those of the falsification detection system 41-2 in Fig. 17 are denoted by the same reference signs, and detailed description thereof will be omitted.

As illustrated in Fig. 26, the falsification detection system 41A-4 has a configuration common to the falsification detection system 41-2 in Fig. 17 in including a CMOS image sensor 42, a relay unit 44, a server 46, and a terminal 47. The falsification detection system 41A-4 is different from the falsification detection system 41-2 of Fig. 17 in that an application processor 43A includes a sample unit 25.

That is, the falsification detection system 41A-4 has a configuration in which the server 46 includes image input units 21-1 and 21-2, an alignment unit 22, a color conversion unit 23, and a judgement unit 24, and the application processor 43A includes the sample unit 25, among the blocks constituting the falsification detection device 13A in Fig. 18.

As described above, in the falsification detection system 41A-4, after reducing the data amount of the reference image by performing the sample in the application processor 43A, the first image (reference image) and the second image (query image) can be transmitted through different paths. As a result, for example, the amount of communication data between the CMOS image sensor 42 and the application processor 43A can be reduced.

### <Third configuration example of falsification detection device>

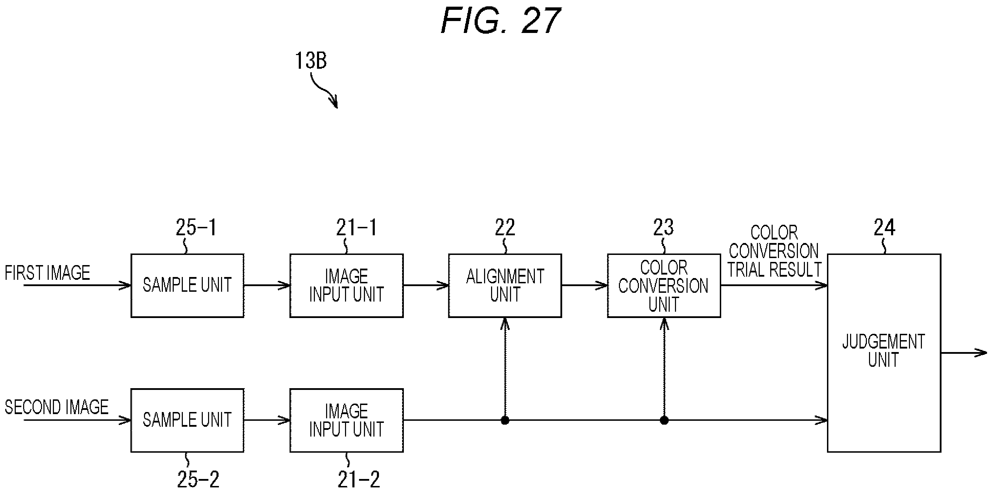

Fig. 27 is a block diagram illustrating a configuration example of a third embodiment of a falsification detection device to which the present technology is applied. Note that, in a falsification detection device 13B illustrated in Fig. 27, configurations common to those of the falsification detection device 13 in Fig. 2 are denoted by the same reference signs, and detailed description thereof will be omitted.

As illustrated in Fig. 27, the falsification detection device 13B has a configuration common to the falsification detection device 13 of Fig. 2 in that image input units 21-1 and 21-2, an alignment unit 22, a color conversion unit 23, and a judgement unit 24 are included. Then, the falsification detection device 13B has a configuration different from that of the falsification detection device 13 in Fig. 2 in including sample units 25-1 and 25-2.

The sample unit 25-1 is configured similarly to the sample unit 25 described above with reference to Fig. 18, samples the reference image input to the falsification detection device 13B to reduce the data amount, and supplies the reduced data amount to the image input unit 21-1.

The sample unit 25-2 samples the query image input to the falsification detection device 13B to reduce the data amount, and supplies the reduced data amount to the image input unit 21-2. For example, the sample unit 25-2 can perform processing similar to that of the sample unit 25-1.

The falsification detection device 13B configured as described above can set the color of the first image and the color of the second image to the same number by sampling the reference image by the sample unit 25-1 and sampling the query image by the sample unit 25-2. Then, by reducing the data amount of the first image and the second image, the falsification detection device 13B can further reduce the calculation amount and execute the falsification detection processing.

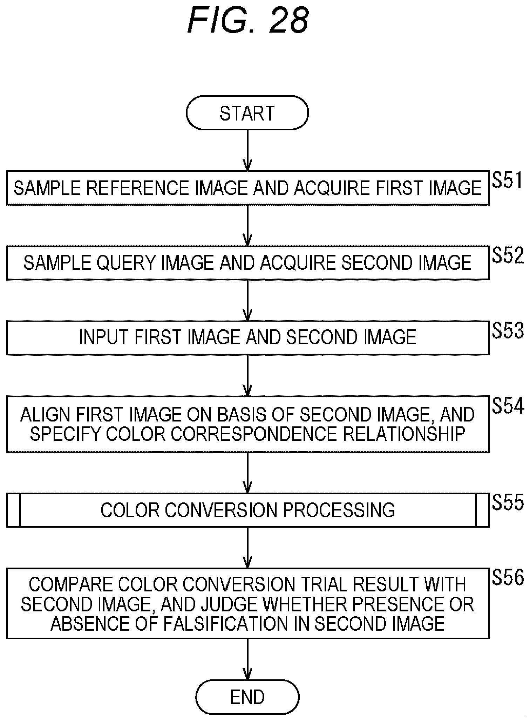

The falsification detection processing executed in the falsification detection device 13B will be described with reference to a flowchart illustrated in Fig. 28.

For example, when the reference image and the query image are input to the falsification detection device 13, the falsification detection processing is started. In step S51, the sample unit 25-1 samples the reference image and supplies the reference image to the image input unit 21-1, and the image input unit 21-1 acquires the sampled reference image as the first image.

In step S52, the sample unit 25-2 samples the query image and supplies the query image to the image input unit 21-2, and the image input unit 21-2 acquires the sampled query image as the second image.

Thereafter, in steps S53 to S56, processing similar to that in steps S11 to S14 of Fig. 5 is performed.

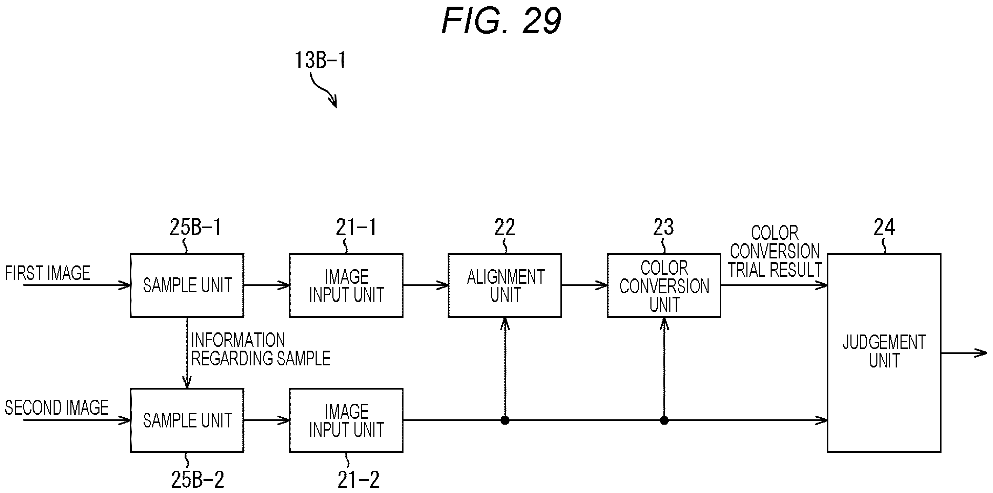

Fig. 29 is a block diagram illustrating a configuration example of a first modification of the falsification detection device 13B. Note that, in a falsification detection device 13B-1 illustrated in Fig. 29, configurations common to those of the falsification detection device 13B in Fig. 27 are denoted by the same reference signs, and detailed description thereof will be omitted.

As illustrated in Fig. 29, the falsification detection device 13B-1 has a configuration common to the falsification detection device 13B in Fig. 27 in including image input units 21-1 and 21-2, an alignment unit 22, a color conversion unit 23, and a judgement unit 24. Then, the falsification detection device 13B-1 has a configuration different from that of the falsification detection device 13B in Fig. 27 in including sample units 25B-1 and 25B-2.

The sample unit 25B-1 samples the reference image input to the falsification detection device 13B-1 to reduce the data amount, and supplies the reduced data amount to the image input unit 21-1, similarly to the sample unit 25-1 in Fig. 27. Moreover, similarly to the sample unit 25A-1 in Fig. 20, the sample unit 25B-1 can supply information indicating the size of the dynamically decided block, information indicating coordinates specifying a representative color of the block, or an index of the selected coefficient to the sample unit 25B-2 as information regarding a sample.

The sample unit 25B-2 can perform processing similar to that of the sample unit 25B-1 by using the information regarding the sample supplied from the sample unit 25B-1.

Similarly to the falsification detection device 13B in Fig. 27, the falsification detection device 13B-1 configured as described above can have the same number of colors of the first image and colors of the second image. Moreover, by using the information regarding the sample, the falsification detection device 13B-1 can avoid a case where the sample by the sample unit 25B-1 and the sample by the sample unit 25B-2 have a format different from that of the image including pixels by the sample. Then, by reducing the data amount of the first image and the second image, the falsification detection device 13B-1 can further reduce the calculation amount and execute the falsification detection processing.

### <Application examples of falsification detection system>

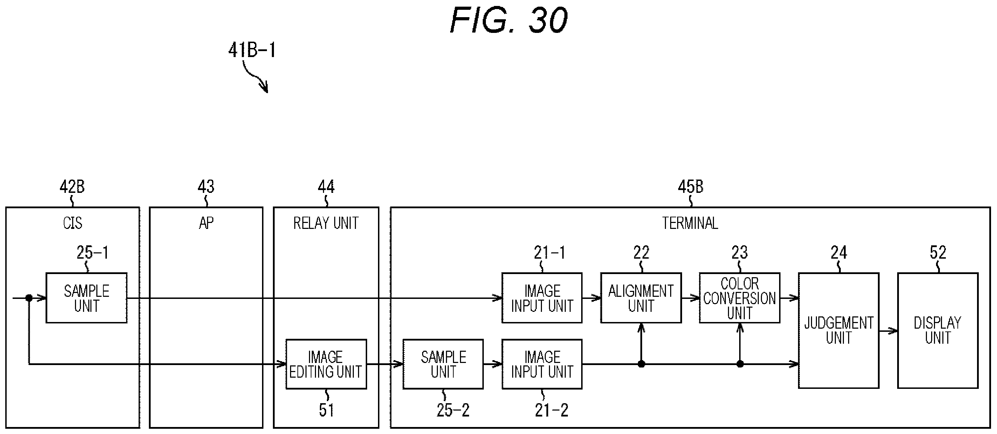

Application examples of a falsification detection system to which the falsification detection device 13B of Fig. 27 as the third embodiment is applied will be described with reference to Figs. 30 to 33.

Fig. 30 is a block diagram illustrating an example of a falsification detection system 41B-1 which is a first application example. Note that, in the falsification detection system 41B-1 illustrated in Fig. 30, configurations common to those of the falsification detection system 41-1 in Fig. 16 are denoted by the same reference signs, and detailed description thereof will be omitted.

As illustrated in Fig. 30, the falsification detection system 41B-1 has a configuration common to the falsification detection system 41-1 of Fig. 16 in including an application processor 43 and a relay unit 44. The falsification detection system 41B-1 is different from the falsification detection system 41-1 of Fig. 16 in that a CMOS image sensor 42B includes a sample unit 25-1 and a terminal 45B includes a sample unit 25-2.

That is, in the falsification detection system 41B-1, the terminal 45B includes image input units 21-1 and 21-2, an alignment unit 22, a color conversion unit 23, a judgement unit 24, and the sample unit 25-2, and the CMOS image sensor 42B includes the sample unit 25-1, among the blocks constituting the falsification detection device 13B in Fig. 27.

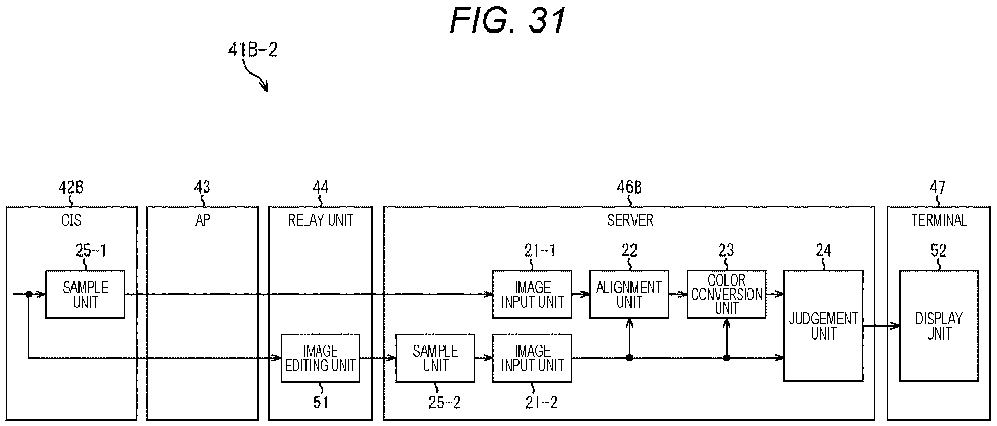

Fig. 31 is a block diagram illustrating an example of a falsification detection system 41B-2 which is a second application example. Note that, in the falsification detection system 41B-2 illustrated in Fig. 31, configurations common to those of the falsification detection system 41-2 in Fig. 17 are denoted by the same reference signs, and detailed description thereof will be omitted.

As illustrated in Fig. 31, the falsification detection system 41B-2 has a configuration common to the falsification detection system 41-2 in Fig. 17 in including an application processor 43, a relay unit 44, and a terminal 47. The falsification detection system 41B-2 is different from the falsification detection system 41-2 of Fig. 17 in that a CMOS image sensor 42B includes a sample unit 25-1 and a server 46B includes a sample unit 25-2.

That is, in the falsification detection system 41B-2, the server 46B includes image input units 21-1 and 21-2, an alignment unit 22, a color conversion unit 23, a judgement unit 24, and the sample unit 25-2, and the CMOS image sensor 42B includes the sample unit 25-1, among the blocks constituting the falsification detection device 13B in Fig. 27.

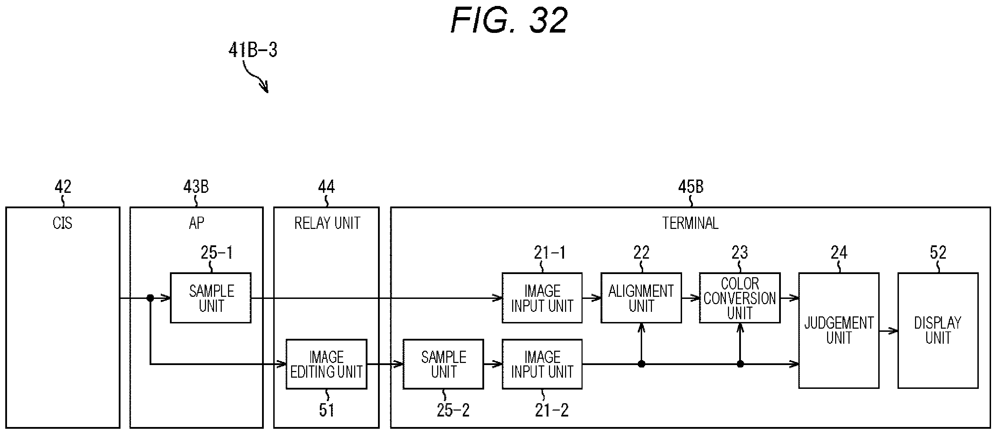

Fig. 32 is a block diagram illustrating an example of a falsification detection system 41B-3 which is a third application example. Note that, in the falsification detection system 41B-3 illustrated in Fig. 32, configurations common to those of the falsification detection system 41-1 in Fig. 16 are denoted by the same reference signs, and detailed description thereof will be omitted.

As illustrated in Fig. 32, the falsification detection system 41B-3 has a configuration common to that of the falsification detection system 41-1 in Fig. 16 in including a CMOS image sensor 42 and a relay unit 44. Then, the falsification detection system 41B-1 has a configuration different from that of the falsification detection system 41-1 of Fig. 16 in that an application processor 43B includes a sample unit 25-1 and a terminal 45 includes a sample unit 25-2.

That is, the falsification detection system 41B-3 has a configuration in which the terminal 45B includes image input units 21-1 and 21-2, an alignment unit 22, a color conversion unit 23, a judgement unit 24, and the sample unit 25-2, and the application processor 43B includes the sample unit 25-1, among the blocks constituting the falsification detection device 13B in Fig. 27.

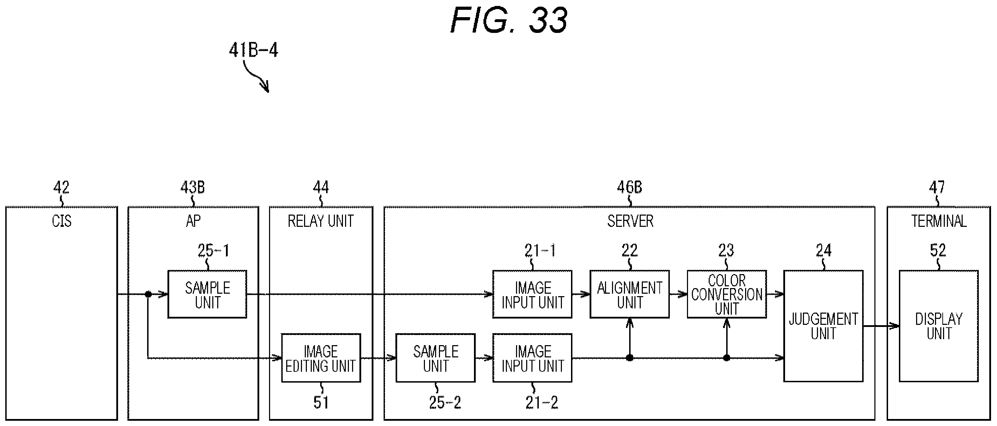

Fig. 33 is a block diagram illustrating an example of a falsification detection system 41B-4 which is a fourth application example. Note that, in the falsification detection system 41B-4 illustrated in Fig. 33, configurations common to those of the falsification detection system 41-2 in Fig. 17 are denoted by the same reference signs, and detailed description thereof will be omitted.

As illustrated in Fig. 33, the falsification detection system 41B-4 has a configuration common to the falsification detection system 41-2 in Fig. 17 in including a CMOS image sensor 42, a relay unit 44, and a terminal 47. The falsification detection system 41B-4 is different from the falsification detection system 41-2 of Fig. 17 in that an application processor 43B includes a sample unit 25-1 and a server 46B includes a sample unit 25-2.

That is, in the falsification detection system 41B-4, the server 46B includes image input units 21-1 and 21-2, an alignment unit 22, a color conversion unit 23, a judgement unit 24, and the sample unit 25-2, and the application processor 43B includes the sample unit 25-1, among the blocks constituting the falsification detection device 13B in Fig. 27.

### <Fourth configuration example of falsification detection device>

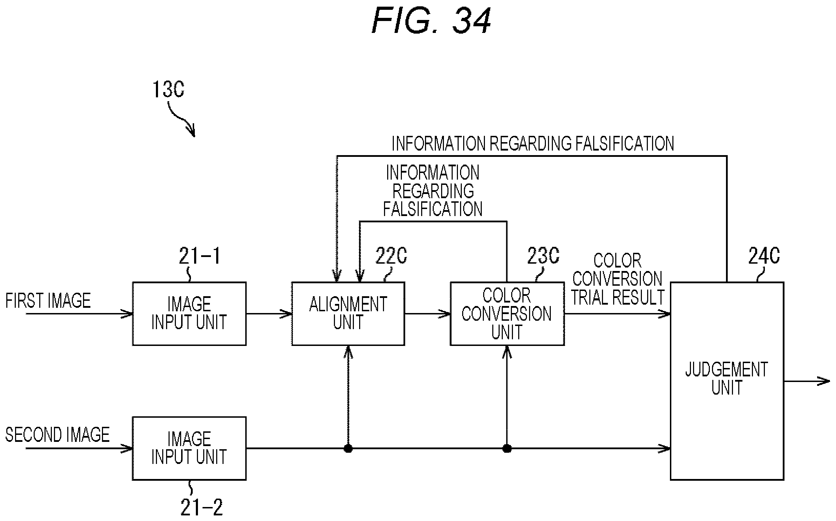

Fig. 34 is a block diagram illustrating a configuration example of a fourth embodiment of a falsification detection device to which the present technology is applied. Note that, in a falsification detection device 13C illustrated in Fig. 34, configurations common to those of the falsification detection device 13 in Fig. 2 are denoted by the same reference signs, and detailed description thereof will be omitted.

As illustrated in Fig. 34, the falsification detection device 13C has a configuration common to the falsification detection device 13 of Fig. 2 in that image input units 21-1 and 21-2 are provided. Then, the falsification detection device 13C is different from the falsification detection device 13 of Fig. 2 in that it includes an alignment unit 22C, a color conversion unit 23C, and a judgement unit 24C.

In the falsification detection device 13C, the color conversion unit 23C and the judgement unit 24C feed back information regarding falsification to the alignment unit 22C, and the alignment unit 22C can perform alignment with respect to the first image on the basis of the information regarding falsification.

For example, the judgement unit 24C can compare the color conversion trial result supplied from the color conversion unit 23C with the second image to estimate the magnitude of falsification in the second image, and supplies the magnitude of falsification in the second image to the alignment unit 22C as information regarding falsification. As a result, the alignment unit 22C adjusts the internal parameter used to align the first image such that the magnitude of falsification in the second image is reduced according to the information regarding falsification supplied from the judgement unit 24C. Then, the internal parameter used to align the first image is repeatedly updated until the minimization of the magnitude of falsification in the second image is completed. For example, as an internal parameter used by the alignment unit 22C to align the first image, a matrix element such as an affine transformation or a homography transformation can be used.

The falsification detection device 13C configured as described above can align the first image by the alignment unit 22C with high accuracy.

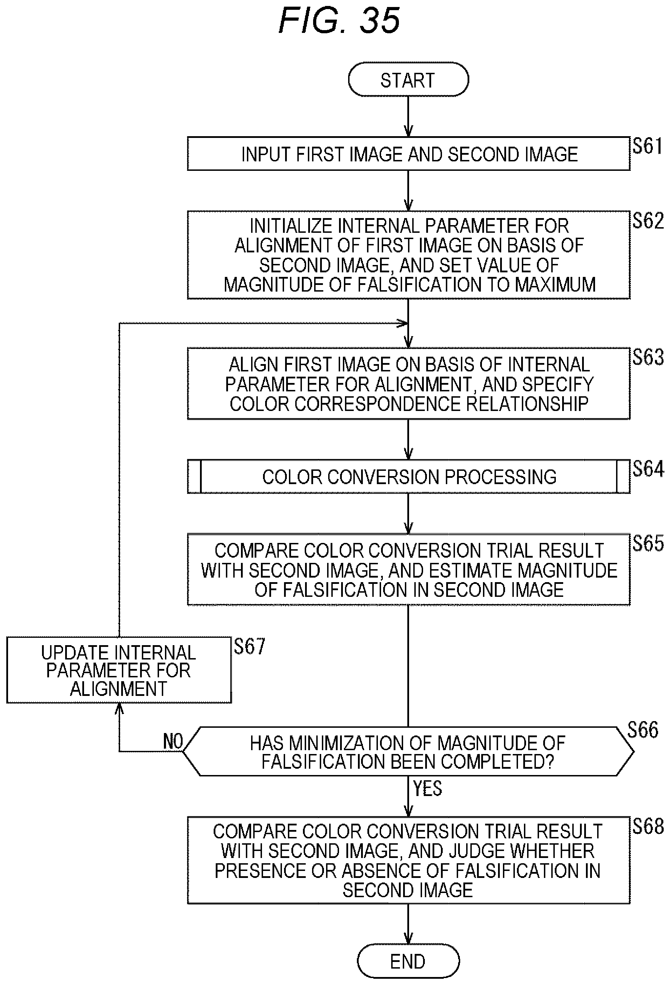

A first processing example of the falsification detection processing executed in the falsification detection device 13C will be described with reference to a flowchart illustrated in Fig. 35.

For example, when the reference image and the query image are input to the falsification detection device 13, the falsification detection processing is started. In step S61, the image input unit 21-1 acquires the reference image as the first image, and the image input unit 21-2 acquires the query image as the second image. Then, the image input unit 21-1 supplies the first image to the alignment unit 22C, and the image input unit 21-2 supplies the second image to the alignment unit 22C, the color conversion unit 23C, and the judgement unit 24C.

In step S62, the alignment unit 22C initializes an internal parameter used to align the first image on the basis of the second image, and sets the value of the magnitude of the falsification to the maximum value.

In step S63, the alignment unit 22C aligns the first image on the basis of the internal parameter for alignment, specifies a color correspondence relationship between the color of the first image and the color of the second image, and registers the color correspondence relationship in the color conversion database 31.

In step S64, the color conversion processing described above with reference to Fig. 6 is executed, and a color conversion trial result obtained in the color conversion processing is supplied to the judgement unit 24.

In step S65, the judgement unit 24 compares the color conversion trial result supplied from the color conversion unit 23 in step S64 with the second image supplied from the image input unit 21-2 in step S61, and estimates the magnitude of falsification in the second image. Then, the judgement unit 24 supplies the magnitude of falsification in the second image to the alignment unit 22C as information regarding falsification.

In step S66, the alignment unit 22C judges whether or not the minimization of the magnitude of falsification in the second image has been completed on the basis of the information regarding falsification supplied from the judgement unit 24 in step S65.

In step S66, in a case where the alignment unit 22C judges that the minimization of the magnitude of falsification in the second image has not been completed, the processing proceeds to step S67.

In step S67, the alignment unit 22C updates the internal parameter used to align the first image so that the magnitude of falsification in the second image decreases. Thereafter, the processing returns to step S63, and similar processing is repeated subsequently.

On the other hand, in step S66, in a case where the alignment unit 22C judges that the minimization of the magnitude of falsification in the second image has been completed, the processing proceeds to step S68.

In step S68, the judgement unit 24 compares the color conversion trial result determined to have completed the minimization of the magnitude of falsification in the second image with the second image supplied from the image input unit 21-2 in step S61, and judges whether the presence or absence of falsification in the second image. For example, the judgement unit 24 outputs a judgement result indicating that there is falsification in a case where it is judged that there is falsification in the second image, and outputs a judgement result indicating that there is no falsification in a case where it is judged that there is no falsification in the second image. Thereafter, the falsification detection processing ends.

As described above, the falsification detection device 13C can judge whether the presence or absence of falsification in the second image after minimizing the magnitude of falsification in the second image.

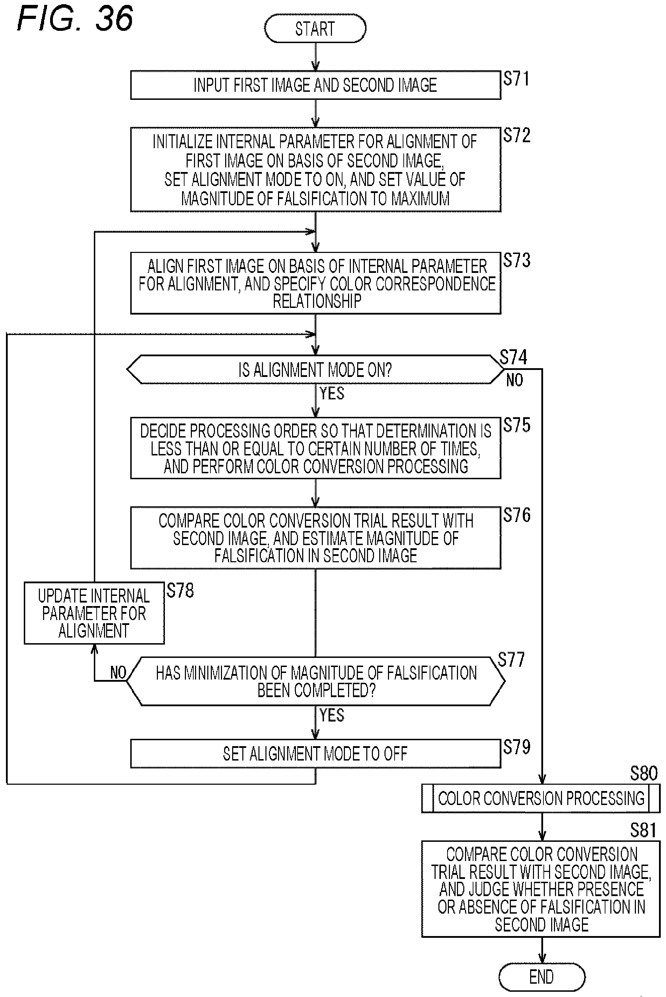

A second processing example of the falsification detection processing executed in the falsification detection device 13C will be described with reference to a flowchart illustrated in Fig. 36.

For example, when the reference image and the query image are input to the falsification detection device 13, the falsification detection processing is started. In step S71, the image input unit 21-1 acquires the reference image as the first image, and the image input unit 21-2 acquires the query image as the second image. Then, the image input unit 21-1 supplies the first image to the alignment unit 22C, and the image input unit 21-2 supplies the second image to the alignment unit 22C, the color conversion unit 23C, and the judgement unit 24C.

In step S72, the alignment unit 22C initializes an internal parameter used to align the first image on the basis of the second image, sets the alignment mode to ON, and sets the value of the magnitude of the falsification to the maximum value.

In step S73, the alignment unit 22C aligns the first image on the basis of the alignment internal parameter, specifies a color correspondence relationship between the color of the first image and the color of the second image, and registers the color correspondence relationship in the color conversion database 31.

In step S74, the alignment unit 22C judges whether or not the alignment mode is set to ON, and in a case where it is judged that the alignment mode is set to ON, the processing proceeds to step S75.

In step S75, after the processing order decision unit 33 decides the processing order so that the determination based on the color correspondence relationship is less than or equal to a certain number of times, the color conversion processing described above with reference to Fig. 6 is executed, and the color conversion trial result obtained in the color conversion processing is supplied to the judgement unit 24.

In step S76, the judgement unit 24 compares the color conversion trial result supplied from the color conversion unit 23 in step S75 with the second image supplied from the image input unit 21-2 in step S71, and estimates the magnitude of falsification in the second image. Then, the judgement unit 24 supplies the magnitude of falsification in the second image to the alignment unit 22C as information regarding falsification.

In step S77, the alignment unit 22C judges whether or not the minimization of the magnitude of falsification in the second image has been completed on the basis of the information regarding falsification supplied from the judgement unit 24 in step S76.

In step S77, in a case where the alignment unit 22C judges that the minimization of the magnitude of falsification in the second image has not been completed, the processing proceeds to step S78.

In step S78, the alignment unit 22C updates the internal parameter used to align the first image so that the magnitude of falsification in the second image decreases. Thereafter, the processing returns to step S73, and similar processing is repeated subsequently.

On the other hand, in step S77, in a case where the alignment unit 22C judges that the minimization of the magnitude of falsification in the second image has been completed, the processing proceeds to step S79.

In step S79, after the alignment unit 22C sets the alignment mode to OFF, the processing returns to step S74, and similar processing is repeatedly performed thereafter.

On the other hand, in step S74, in a case where the alignment unit 22C judges that the alignment mode is not set to ON, that is, the alignment mode is set to OFF, the processing proceeds to step S80.

In step S80, the color conversion processing described above with reference to Fig. 6 is executed, and a color conversion trial result obtained in the color conversion processing is supplied to the judgement unit 24.

In step S81, the judgement unit 24 compares the color conversion trial result judged to have completed the minimization of the magnitude of falsification in the second image with the second image supplied from the image input unit 21-2 in step S71, and judges whether the presence or absence of falsification in the second image. For example, the judgement unit 24 outputs a judgement result indicating that there is falsification in a case where it is judged that there is falsification in the second image, and outputs a judgement result indicating that there is no falsification in a case where it is judged that there is no falsification in the second image. Thereafter, the falsification detection processing ends.

As described above, the falsification detection device 13C can reduce the amount of calculation by deciding the processing order such that the determination based on the color correspondence relationship is less than or equal to a certain number of times, minimize the magnitude of falsification in the second image, and then judge whether the presence or absence of falsification in the second image.

### <Fifth configuration example of falsification detection device>

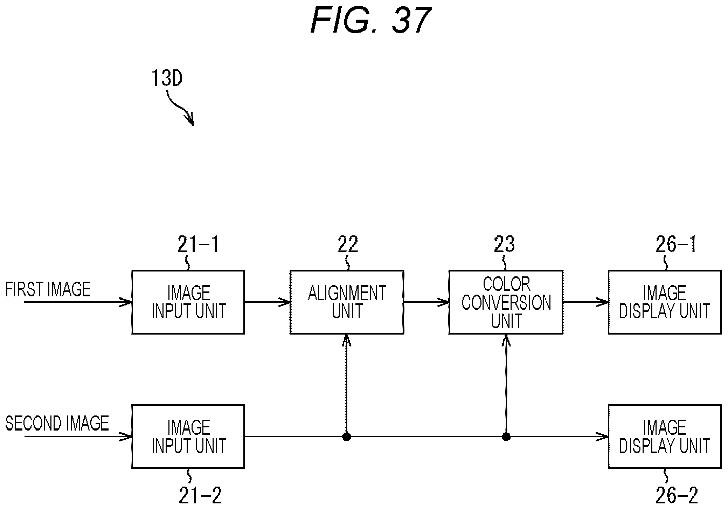

Fig. 37 is a block diagram illustrating a configuration example of a fifth embodiment of a falsification detection device to which the present technology is applied. Note that, in a falsification detection device 13D illustrated in Fig. 37, configurations common to those of the falsification detection device 13 in Fig. 2 are denoted by the same reference signs, and detailed description thereof will be omitted.

As illustrated in Fig. 37, the falsification detection device 13D has a configuration common to the falsification detection device 13 of Fig. 2 in including the image input units 21-1 and 21-2, the alignment unit 22, and the color conversion unit 23. Then, the falsification detection device 13A has a configuration different from that of the falsification detection device 13 of Fig. 2 in that image display units 26-1 and 26-2 are provided.

The image display unit 26-1 displays the color conversion trial result (that is, the first image aligned on the basis of the second image in an alignment unit 22 and subjected to the color conversion estimated to be applied to the second image in a color conversion unit 23) supplied from the color conversion unit 23.

The image display unit 26-2 displays the second image supplied from the image input unit 21-2.

Fig. 38 illustrates display examples of the image display units 26-1 and 26-2.

For example, the image display units 26-1 and 26-2 can be displayed side by side in the vertical direction (A of Fig. 38) or the image display units 26-1 and 26-2 can be displayed side by side in the horizontal direction (B of Fig. 38) on a display 61 included in the terminal including each block constituting the falsification detection device 13D. As a result, depending on the size of the display 61, a user can judge whether the presence or absence of falsification in the second image by comparing the first image with the second image.

Furthermore, as illustrated in C of Fig. 38, a switching button 62 may be displayed on the display 61, and the display of the image display unit 26-1 and the display of the image display unit 26-2 may be switched according to the operation on the switching button 62. Note that display positions of the switching buttons 62 may be above the image display units 26-1 and 26-2. In this manner, the user can easily judge whether the presence or absence of falsification in the second image by actively switching the display by operating the switching buttons 62.

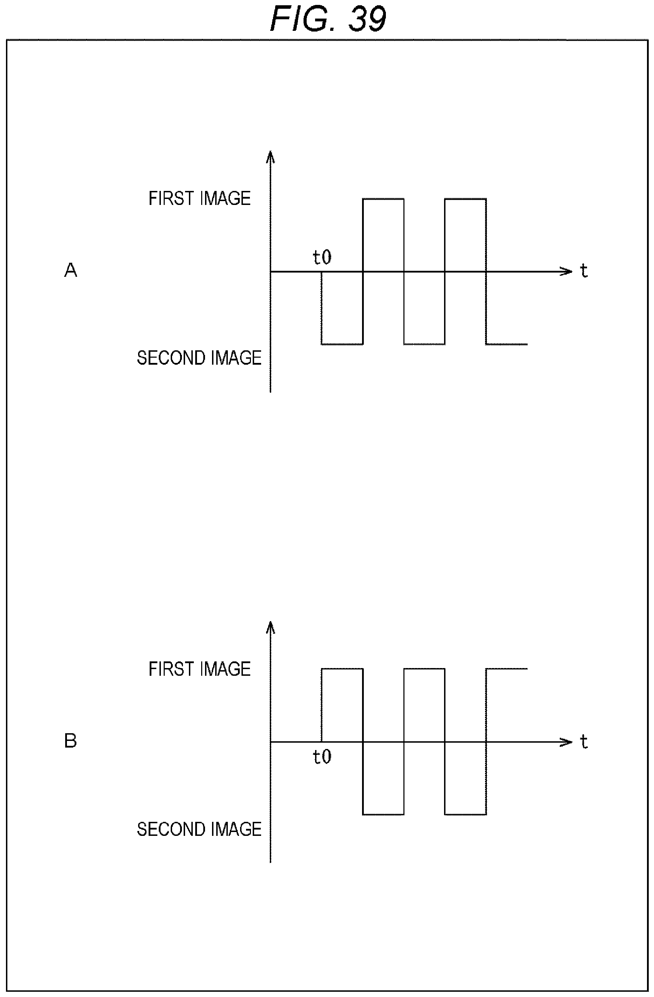

Furthermore, the display of the image display unit 26-1 and the image display unit 26-2 may be switched at predetermined display time intervals according to the passage of time t. For example, as illustrated in A of Fig. 39, display can be started from the image display unit 26-2 at time t0, or as illustrated in B of Fig. 39, display can be started from the image display unit 26-1 at time t0 to temporally switch between the image display unit 26-1 and the image display unit 26-2. As a result, even in a case where the switching button 62 cannot be displayed on the display 61 and the input interface is limited, the user can easily judge whether the presence or absence of falsification in the second image.

Note that the image display unit 26-1 and the image display unit 26-2 may have a function of enlarging or reducing the first image and the second image, and an enlargement ratio, a display position, and the like may be synchronized between the image display unit 26-1 and the image display unit 26-2. Furthermore, when the first image and the second image are enlarged, portions outside the display regions of the image display unit 26-1 and the image display unit 26-2 may be hidden.

As described above, the falsification detection device 13D displays the color conversion trial result on the image display unit 26-1 and displays the second image on the image display unit 26-2, so that the user can easily judge whether the presence or absence of falsification in the second image and can base the judgement result.

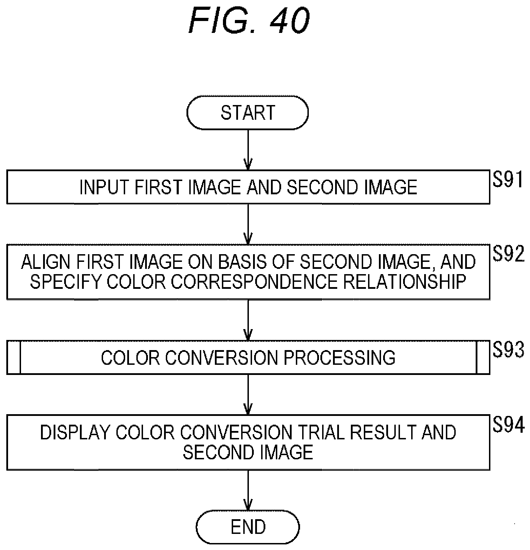

Falsification detection processing executed in the falsification detection device 13D will be described with reference to a flowchart illustrated in Fig. 40.

In steps S91 to S93, processing similar to that of steps S11 to S13 of Fig. 5 is performed.

In step S94, the image display unit 26-1 displays the color conversion trial result supplied from the color conversion unit 23 in step S93, and the image display unit 26-2 displays the second image supplied from the image input unit 21-2 in step S91. Thereafter, the falsification detection processing ends.

### <Application examples of falsification detection system>

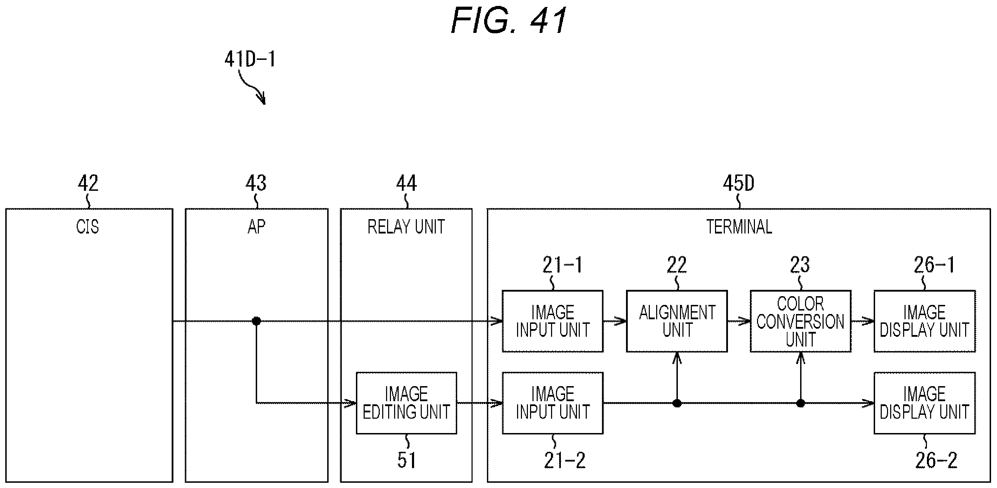

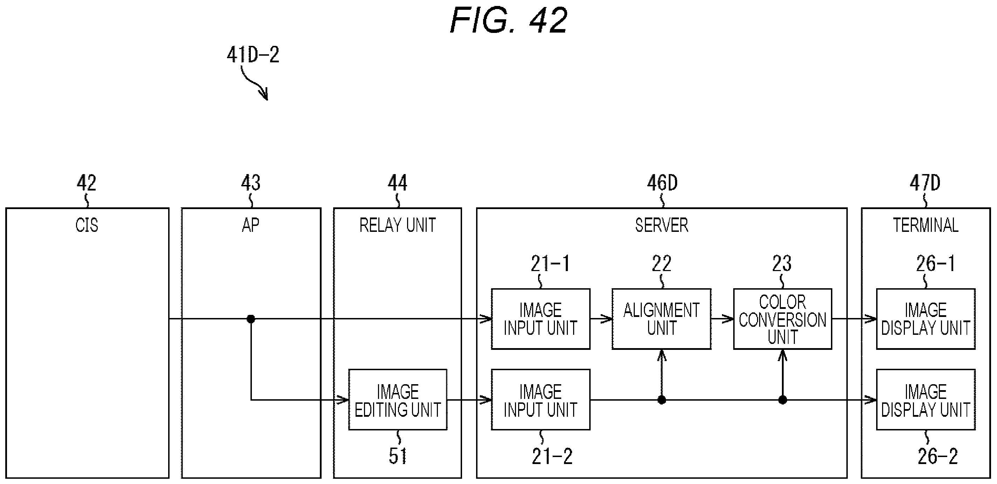

Application examples of a falsification detection system to which the falsification detection device 13D of Fig. 37 as the fifth embodiment is applied will be described with reference to Figs. 41 and 42.

Fig. 41 is a block diagram illustrating an example of a falsification detection system 41D-1 as a first application example. Note that, in the falsification detection system 41D-1 illustrated in Fig. 41, configurations common to those of the falsification detection system 41-1 in Fig. 16 are denoted by the same reference signs, and detailed description thereof will be omitted.

As illustrated in Fig. 41, the falsification detection system 41D-1 has a configuration common to the falsification detection system 41-1 in Fig. 16 in including a CMOS image sensor 42, an application processor 43, and a relay unit 44. Then, the falsification detection system 41D-1 has a configuration different from that of the falsification detection system 41-1 in Fig. 16 in that a terminal 45D includes image display units 26-1 and 26-2.

That is, the falsification detection system 41D-1 has a configuration in which the terminal 45D includes image input units 21-1 and 21-2, an alignment unit 22, a color conversion unit 23, and the image display units 26-1 and 26-2 among the blocks constituting the falsification detection device 13D in Fig. 37.

Fig. 42 is a block diagram illustrating an example of a falsification detection system 41D-2 which is a second application example. Note that, in the falsification detection system 41D-2 illustrated in Fig. 42, configurations common to those of the falsification detection system 41-2 in Fig. 17 are denoted by the same reference signs, and detailed description thereof will be omitted.

As illustrated in Fig. 42, the falsification detection system 41D-2 has a configuration common to the falsification detection system 41-2 in Fig. 17 in including a CMOS image sensor 42, an application processor 43, and a relay unit 44. Then, the falsification detection system 41D-1 has a configuration different from that of the falsification detection system 41-2 in Fig. 17 in that a terminal 47D includes image display units 26-1 and 26-2.

That is, in the falsification detection system 41D-2, a server 46D includes image input units 21-1 and 21-2, an alignment unit 22, and a color conversion unit 23, and the terminal 47D includes the image display units 26-1 and 26-2, among the blocks constituting the falsification detection device 13D in Fig. 37.

### <Configuration example of computer>

Next, a series of the processes described above (an information processing method) may be performed by hardware or can be performed by software. In a case where the series of processes is executed by software, a program constituting the software is installed on a general-purpose computer or the like.

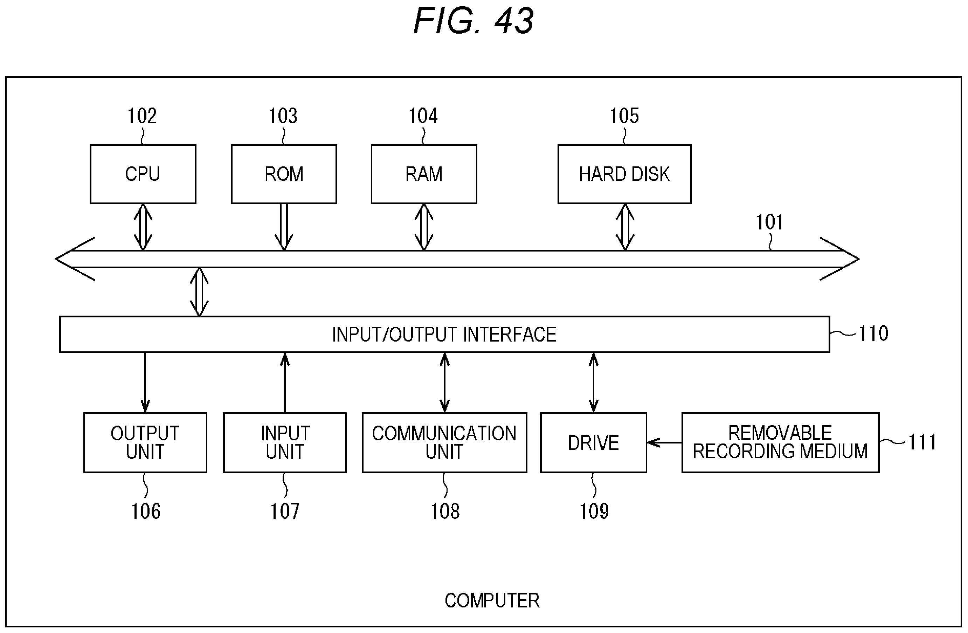

Fig. 43 is a block diagram illustrating a configuration example of an embodiment of a computer on which a program for executing the series of processing described above is installed.

The program can be recorded beforehand on a hard disk 105 or a ROM 103 as a recording medium incorporated into the computer.

Alternatively, furthermore, the program can also be stored (recorded) in a removable recording medium 111 driven by a drive 109. Such a removable recording medium 111 can be provided as so-called package software. Here, examples of the removable recording medium 111 include, for example, a flexible disk, a compact disc read only memory (CD-ROM), a magneto optical (MO) disk, a digital versatile disc (DVD), a magnetic disk, a semiconductor memory and the like.

Note that, instead of being installed into the computer from the removable recording medium 111 as described above, the program can be downloaded into the computer via a communication network or a broadcasting network, and be installed into the hard disk 105 included therein. In other words, for example, the program can be wirelessly transferred from a download site to the computer through an artificial satellite for digital satellite broadcasting, or can be transferred by wire to the computer through a network such as a local area network (LAN) and the Internet.

The computer has a built-in central processing unit (CPU) 102, and an input/output interface 110 is connected to the CPU 102 through a bus 101.

When a command is input by a user operating an input unit 107 via the input/output interface 110 or the like, the CPU 102 executes the program stored in the read only memory (ROM) 103 in accordance with the command. Alternatively, the CPU 102 loads a program stored in the hard disk 105 into a random access memory (RAM) 104 to execute the program.

Therefore, the CPU 102 performs processing according to the above-described flowchart or processing to be performed according to the above configuration described with the block diagram. Then, as necessary, the CPU 102 outputs a processing result from an output unit 106, or transmits the processing result from a communication unit 108, and further, causes the hard disk 105 to record the processing result, and the like, through the input/output interface 110, for example.

Note that, the input unit 107 includes a keyboard, a mouse, a microphone, and the like. Furthermore, the output unit 106 includes a liquid crystal display (LCD), a speaker, and the like.

A timing or a position of an element constituting any drawing such as a block diagram or a flowchart is an example, and may be configured to be different. The embodiments described in each example has various modifications. Furthermore, in the configuration elements of each of the described examples, some of the configuration elements may be omitted, some or all of the configuration elements may be changed, or some or all of the configuration elements may be modified. Furthermore, a part may be replaced with another configuration element, or another configuration element may be added to a part or all of the configuration elements.

Moreover, a part or all of the configuration elements may be divided into a plurality of configuration elements, a part or all of the configuration elements may be separated into a plurality of configuration elements, or at least some of the divided or separated configuration elements may have different functions or features. Furthermore, at least some of the configuration elements may be moved to form a different embodiment. Moreover, a coupling element and a relay element may be added to a combination of at least some of the configuration elements to form a different embodiment. In addition, a switching function or a selection function may be added to a combination of at least some of the configuration elements to form a different embodiment.

Here, in the present specification, the processing to be performed by the computer in accordance with a program is not necessarily performed in time series according to the order illustrated in the flowchart. In other words, the processing to be performed by the computer in accordance with the program include processing to be executed in parallel or independently (for example, parallel processing or object-based processing).

Furthermore, the program may be processed by one computer (one processor) or processed in a distributed manner by a plurality of computers. Moreover, the program may be transferred to a distant computer to be executed.

Moreover, in the present description, a system means a set of a plurality of configuration elements (devices, modules (parts), and the like), and it does not matter whether or not all the configuration elements are in the same housing. Therefore, a plurality of devices housed in separate housings and connected to each other through a network and a single device including a plurality of modules housed in a single housing are both systems.

Furthermore, for example, a configuration described as one device (or processing unit) may be divided and configured as the plurality of devices (or processing units). Conversely, configurations described above as a plurality of devices (or processing units) may be collectively configured as one device (or processing unit). Furthermore, it goes without saying that a configuration other than the above-described configurations may be added to the configuration of each device (or each processing unit). Moreover, as long as the configuration and operation of the entire system are substantially the same, a part of the configuration of a certain device (or processing unit) may be included in the configuration of another device (or another processing unit).

Furthermore, for example, the present technology can be configured as cloud computing in which one function is shared and jointly processed by the plurality of the devices through the network.

Furthermore, for example, the program described above can be executed by an optional device. In this case, the device is only required to have a necessary function (functional block or the like) and obtain necessary information.

Furthermore, for example, each step described in the flowcharts described above can be executed by one device, or can be executed in a shared manner by the plurality of the devices. Moreover, in a case where a single step includes a plurality of pieces of processing, the plurality of pieces of processing included in the single step can be performed by a single device or performed by a plurality of devices in a shared manner. In other words, the plurality of pieces of processing included in one step can also be executed as pieces of processing of a plurality of steps. Conversely, processing described as a plurality of steps can also be collectively executed as one step.

Note that, in the program to be executed by the computer, the processing in steps describing the program may be executed in time series in the order described in the present specification, or may be executed in parallel, or independently at a necessary timing such as when a call is made. That is, as long as there is no contradiction, the processing of each step may be performed in a different order from the above-described order. Moreover, this processing in steps describing program may be executed in parallel with processing of another program, or may be executed in combination with processing of another program.

Note that, the plurality of present technologies that has been described in the present specification can each be implemented independently as a single unit unless there is a contradiction. It goes without saying that any plurality of present technologies can be implemented in combination. For example, a part or all of the present technologies described in any of the embodiments can be implemented in combination with a part or all of the present technologies described in other embodiments. Furthermore, a part or all of any of the above-described present technologies can be implemented together with another technology that is not described above.

Note that, the present embodiment is not limited to the embodiments described above, and various modifications can be made without departing from the gist of the present disclosure. Furthermore, the effects described herein are merely examples and are not restrictive, and there may be other effects.

### REFERENCE SIGNS LIST

- 11: Imaging device
- 12: Image editing device
- 13: Falsification detection device
- 21-1 and 21-2: Image input unit
- 22: Alignment unit
- 23: Color conversion unit
- 24: Judgment unit
- 25-1 and 25-2: Sample unit
- 26-1 and 26-2: Image display unit
- 31: Color conversion database
- 32: Color interpolation unit
- 33: Processing order decision unit
- 34: Color correspondence relationship determination unit
- 35: Color conversion performing unit
- 36: Pre-conversion unit
- 41: Falsification detection system
- 42: CMOS image sensor
- 43: Application processor
- 44: Relay unit
- 45: Terminal
- 46: Server
- 47: Terminal
- 51: Image editing unit
- 52: Display unit
- 61: Display

## Claims

1. An information processing device (13) comprising:
a color conversion unit (23) configured to make an estimate of color conversion applied to a second image generated by image editing on a first image, and output a color conversion trial result in which color conversion according to the estimate is applied to the first image;
a judgement unit (24) configured to compare the color conversion trial result with the second image to judge whether presence or absence of falsification in the second image; and
an alignment unit (22) configured to align the first image on a basis of the second image in correspondence with an operation applied to the second image in the image editing,
wherein the color conversion unit (23) is configured to apply the color conversion to the first image aligned by the alignment unit (22), and
wherein the alignment unit (22) is configured to specify a color correspondence relationship between a color of the first image and a color of the second image between corresponding pixels of each pixel constituting the first image and each pixel constituting the second image by aligning the first image on a basis of the second image.

2. The information processing device (13) according to claim 1,
wherein the color conversion unit (23) includes
a color conversion database (31) configured to register the color correspondence relationship specified by the alignment unit (22), and
a color conversion performing unit (35) configured to refer to the color conversion database (31) and execute the color conversion on the first images aligned by the alignment unit (22).

3. The information processing device (13) according to claim 2,
wherein the color conversion unit (23) further includes a color interpolation unit (32) configured to generate a highly reliable color correspondence relationship using the color correspondence relationship specified by the alignment unit (22) and register the highly reliable color correspondence relationship in the color conversion database (31).

4. The information processing device (13) according to claim 3,
wherein the color interpolation unit (32) is configured to generate the highly reliable color correspondence relationship by performing color interpolation for obtaining an average value or a median value of colors in a set of colors including two or more pixels, in particular,
wherein agglomerative clustering in which elements at close distances are combined in a color space corresponding to the first image is used to determine the set by the color interpolation unit (32).

5. The information processing device (13) according to claim 2 or 3,
wherein the color conversion unit (23) further includes a color correspondence relationship determination unit (34) configured to determine whether the color correspondence relationship registered in the color conversion database (31) is normal color conversion or falsification, in particular,
wherein the color correspondence relationship determination unit (34) is configured to determine whether the color correspondence relationship of a determination processing target is normal color conversion or falsification by using a distance relationship between a color of the first image and a color of the second image associated in the color correspondence relationship already determined to be normal color conversion for the color of the first image and the color of the second image associated in the color correspondence relationship of the determination processing target.

6. The information processing device (13) according to claim 5,
wherein the color conversion unit (23) further includes a processing order decision unit (33) configured to decide a processing order indicating an order of the color correspondence relationship to be a determination processing target in the color correspondence relationship determination unit (34), in particular,
wherein the processing order decision unit (33) is configured to obtain reliability of the color correspondence relationship and decide the processing order according to a degree of the reliability.

7. The information processing device (13) according to any one of the previous claims, further comprising:
a first sample unit (25-1) configured to reduce a data amount by sampling a reference image to be the first image.

8. The information processing device (13) according to claim 7,
wherein the first sample unit (25-1) is configured to supply information regarding the sample to the alignment unit (22), and
the alignment unit (22) is configured to align the first image after converting the first image using the information regarding the sample, or
wherein the first sample unit (25-1) is configured to generate information regarding judgement from the information that has not been sampled and supply the information regarding judgement to the judgement unit (24), and
the judgement unit (24) is configured to decide a threshold for judging whether presence or absence of falsification in the second image using the information regarding judgement.

9. The information processing device (13) according to claim 7, further comprising:
a second sample unit (25-2) configured to reduce a data amount by sampling a query image to be the second image, in particular,
wherein the first sample unit (25-1) is configured to supply information regarding the sample to the second sample unit (25-2); and
the second sample unit (25-2) is configured to perform a sample same as the first sample unit (25-1) by using the information regarding the sample.

10. The information processing device (13) according to any one of the previous claims,
wherein the judgement unit (24) is configured to supply to the alignment unit (22) information regarding falsification indicating a magnitude of falsification in the second image, and
the alignment unit (22) is configured to adjust an internal parameter used to align the first image such that the magnitude of falsification in the second image decreases.

11. The information processing device (13) according to any one of the previous claims, further comprising:
a first display unit (26-1) configured to display the color conversion trial result; and
a second display unit (26-2) configured to display the second image.

12. An information processing method, by an information processing device (13), comprising:
making an estimate of color conversion applied to a second image generated by image editing on a first image, and outputting a color conversion trial result in which color conversion according to the estimate is applied to the first image;
comparing the color conversion trial result with the second image to judge whether presence or absence of falsification in the second image; and
aligning the first image on a basis of the second image in correspondence with an operation applied to the second image in the image editing,
wherein applying the color conversion to the first image aligned by the alignment unit (22), and
wherein specifying a color correspondence relationship between a color of the first image and a color of the second image between corresponding pixels of each pixel constituting the first image and each pixel constituting the second image by aligning the first image on a basis of the second image.

13. A program comprising instructions which, when the program is executed by a computer, cause the computer to carry out the method of claim 12.

## Patentansprüche

1. Informationsverarbeitungsvorrichtung (13), umfassend:
eine Farbumwandlungseinheit (23), die konfiguriert ist, um eine Schätzung von Farbumwandlung vorzunehmen, die auf ein zweites Bild, das durch Bildbearbeitung an einem ersten Bild erzeugt wird, angewendet wird, und ein Farbumwandlungsversuchsergebnis, bei dem die Farbumwandlung gemäß der Schätzung auf das erste Bild angewendet wird, auszugeben;
eine Beurteilungseinheit (24), die konfiguriert ist, um das Farbumwandlungsversuchsergebnis mit dem zweiten Bild zu vergleichen, um zu beurteilen, ob ein Vorhandensein oder Fehlen von Verfälschung in dem zweiten Bild vorliegt; und
eine Ausrichtungseinheit (22), die konfiguriert ist, um das erste Bild auf einer Basis des zweiten Bildes entsprechend einer Operation, die auf das zweite Bild in der Bildbearbeitung angewendet wird, auszurichten,
wobei die Farbumwandlungseinheit (23) konfiguriert ist, um die Farbumwandlung auf das erste Bild, das durch die Ausrichtungseinheit (22) ausgerichtet wird, anzuwenden, und
wobei die Ausrichtungseinheit (22) konfiguriert ist, um eine Farbentsprechungsbeziehung zwischen einer Farbe des ersten Bildes und einer Farbe des zweiten Bildes zwischen entsprechenden Pixeln jedes Pixels, das das erste Bild darstellt, und jedes Pixels, das das zweite Bild darstellt, durch Ausrichten des ersten Bildes auf einer Basis des zweiten Bildes zu spezifizieren.

2. Informationsverarbeitungsvorrichtung (13) nach Anspruch 1,
wobei die Farbumwandlungseinheit (23) einschließt
eine Farbumwandlungsdatenbank (31), die konfiguriert ist, um die Farbentsprechungsbeziehung, die durch die Ausrichtungseinheit (22) spezifiziert wird, zu registrieren, und
eine Farbumwandlungsdurchführungseinheit (35), die konfiguriert ist, um sich auf die Farbumwandlungsdatenbank (31) zu beziehen und die Farbumwandlung an den ersten Bildern, die durch die Ausrichtungseinheit (22) ausgerichtet sind, auszuführen.

3. Informationsverarbeitungsvorrichtung (13) nach Anspruch 2,
wobei die Farbumwandlungseinheit (23) ferner eine Farbinterpolationseinheit (32), die konfiguriert ist, um unter Verwendung der Farbentsprechungsbeziehung, die durch die Ausrichtungseinheit (22) spezifiziert wird, eine hochzuverlässige Farbentsprechungsbeziehung zu erzeugen und die hochzuverlässige Farbentsprechungsbeziehung in der Farbumwandlungsdatenbank (31) zu registrieren, einschließt.

4. Informationsverarbeitungsvorrichtung (13) nach Anspruch 3,
wobei die Farbinterpolationseinheit (32) konfiguriert ist, um die hochzuverlässige Farbentsprechungsbeziehung durch Durchführen von Farbinterpolation zum Erhalten eines Durchschnittswerts oder eines Medianwerts von Farben in einem Satz von Farben, einschließlich zweier oder mehr Pixel, zu erzeugen, insbesondere,
wobei agglomeratives Clustering, bei dem Elemente in geringen Abständen in einem Farbraum, der dem ersten Bild entspricht, kombiniert werden, durch die Farbinterpolationseinheit (32) verwendet wird, um den Satz zu bestimmen.

5. Informationsverarbeitungsvorrichtung (13) nach Anspruch 2 oder 3,
wobei die Farbumwandlungseinheit (23) ferner eine Farbentsprechungsbeziehungs-Bestimmungseinheit (34) einschließt, die konfiguriert ist, um zu bestimmen, ob die Farbentsprechungsbeziehung, die in der Farbumwandlungsdatenbank(31) registriert ist, normale Farbumwandlung oder Verfälschung ist, insbesondere,
wobei die Farbentsprechungsbeziehungs-Bestimmungseinheit (34) konfiguriert ist, um zu bestimmen, ob die Farbentsprechungsbeziehung eines Bestimmungsverarbeitungsziels normale Farbumwandlung oder eine Verfälschung ist, durch Verwenden einer Abstandsbeziehung zwischen einer Farbe des ersten Bildes und einer Farbe des zweiten Bildes, verknüpft in der Farbentsprechungsbeziehung bereits als normale Farbumwandlung bestimmt, für die Farbe des ersten Bildes und die Farbe des zweiten Bildes, die in der Farbentsprechungsbeziehung des Bestimmungsverarbeitungsziels verknüpft sind.

6. Informationsverarbeitungsvorrichtung (13) nach Anspruch 5,
wobei die Farbumwandlungseinheit (23) ferner eine Verarbeitungsreihenfolge-Entscheidungseinheit (33) einschließt, die konfiguriert ist, um eine Verarbeitungsreihenfolge zu entscheiden, die eine Reihenfolge der Farbentsprechungsbeziehung, die ein Bestimmungsverarbeitungsziel in der Farbentsprechungsbeziehungs-Bestimmungseinheit (34) sein soll, angibt, insbesondere,
wobei die Verarbeitungsreihenfolge-Entscheidungseinheit (33) konfiguriert ist, um Zuverlässigkeit der Farbentsprechungsbeziehung zu erhalten und die Verarbeitungsreihenfolge gemäß einem Grad der Zuverlässigkeit zu entscheiden.

7. Informationsverarbeitungsvorrichtung (13) nach einem der vorhergehenden Ansprüche, ferner umfassend:
eine erste Abtasteinheit (25-1), die konfiguriert ist, um eine Datenmenge durch Abtasten eines Referenzbildes, das das erste Bild sein soll, zu reduzieren.

8. Informationsverarbeitungsvorrichtung (13) nach Anspruch 7,
wobei die erste Abtasteinheit (25-1) konfiguriert ist, um der Ausrichtungseinheit (22) Informationen bezüglich der Abtastung zuzuführen, und
die Ausrichtungseinheit (22) konfiguriert ist, um das erste Bild nach dem Umwandeln des ersten Bildes unter Verwendung der Informationen bezüglich der Abtastung auszurichten, oder
wobei die erste Abtasteinheit (25-1) konfiguriert ist, um Informationen bezüglich einer Beurteilung aus den Informationen, die nicht abgetastet wurden, zu erzeugen und der Beurteilungseinheit (24) die Informationen bezüglich der Beurteilung zuzuführen, und
die Beurteilungseinheit (24) konfiguriert ist, um, unter Verwendung der Informationen bezüglich der Beurteilung, eine Schwelle zum Beurteilen, ob das Vorhandensein oder Fehlen von Verfälschung in dem zweiten Bild vorliegt, zu entscheiden.

9. Informationsverarbeitungsvorrichtung (13) nach Anspruch 7, ferner umfassend:
eine zweite Abtasteinheit (25-2), die konfiguriert ist, um eine Datenmenge durch Abtasten eines Abfragebildes, das das zweite Bild sein soll, zu reduzieren, insbesondere,
wobei die erste Abtasteinheit (25-1) konfiguriert ist, um der zweiten Abtasteinheit (25- 2) Informationen bezüglich der Abtastung zuzuführen; und
die zweite Abtasteinheit (25-2) konfiguriert ist, um eine Abtastung gleich der ersten Abtasteinheit (25-1) durch Verwenden der Informationen bezüglich der Abtastung durchzuführen.

10. Informationsverarbeitungsvorrichtung (13) nach einem der vorhergehenden Ansprüche,
wobei die Beurteilungseinheit (24) konfiguriert ist, um der Ausrichtungseinheit (22) Informationen bezüglich Verfälschung, die ein Ausmaß von Verfälschung in dem zweiten Bild angeben, zuzuführen, und
die Ausrichtungseinheit (22) konfiguriert ist, um einen internen Parameter, der verwendet wird, um das erste Bild auszurichten, derart zu justieren, dass das Ausmaß von Verfälschung in dem zweiten Bild abnimmt.

11. Informationsverarbeitungsvorrichtung (13) nach einem der vorhergehenden Ansprüche, ferner umfassend:
eine erste Anzeigeeinheit (26-1), die konfiguriert ist, um das Farbumwandlungsversuchsergebnis anzuzeigen; und
eine zweite Anzeigeeinheit (26-2), die konfiguriert ist, um das zweite Bild anzuzeigen.

12. Informationsverarbeitungsverfahren, durch eine Informationsverarbeitungsvorrichtung (13), umfassend:
Vornehmen einer Schätzung von Farbumwandlung, die auf ein zweites Bild, das durch Bildbearbeitung an einem ersten Bild erzeugt wird, angewendet wird, und Ausgeben eines Farbumwandlungsversuchsergebnisses, bei dem die Farbumwandlung gemäß der Schätzung auf das erste Bild angewendet wird;
Vergleichen des Farbumwandlungsversuchsergebnisses mit dem zweiten Bild, um zu beurteilen, ob das Vorhandensein oder Fehlen von Verfälschung in dem zweiten Bild vorliegt; und
Ausrichten des ersten Bildes auf einer Basis des zweiten Bildes entsprechend einer Operation, die auf das zweite Bild in der Bildbearbeitung angewendet wird,
wobei die Farbumwandlung auf das erste Bild, das durch die Ausrichtungseinheit (22) ausgerichtet wird, angewendet wird, und
wobei eine Farbentsprechungsbeziehung zwischen einer Farbe des ersten Bildes und einer Farbe des zweiten Bildes zwischen entsprechenden Pixeln jedes Pixels, das das erste Bild darstellt, und jedes Pixels, das das zweite Bild darstellt, durch Ausrichten des ersten Bildes auf einer Basis des zweiten Bildes spezifiziert wird.

13. Programm, umfassend Anweisungen, die, wenn das Programm durch einen Computer ausgeführt wird, den Computer veranlassen, das Verfahren nach Anspruch 12 zu realisieren.

## Revendications

1. Dispositif de traitement d'informations (13) comprenant :
une unité de conversion de couleur (23) configurée pour réaliser une estimation d'une conversion de couleur appliquée à une seconde image générée par édition d'image sur une première image, et délivrer en sortie un résultat d'essai de conversion de couleur dans lequel une conversion de couleur selon l'estimation est appliquée à la première image ;
une unité de jugement (24) configurée pour comparer le résultat d'essai de conversion de couleur à la seconde image pour juger s'il y a présence ou absence de falsification dans la seconde image ; et
une unité d'alignement (22) configurée pour aligner la première image en fonction de la seconde image en correspondance avec une opération appliquée à la seconde image dans l'édition d'image,
dans lequel l'unité de conversion de couleur (23) est configurée pour appliquer la conversion de couleur à la première image alignée par l'unité d'alignement (22), et
dans lequel l'unité d'alignement (22) est configurée pour spécifier une relation de correspondance de couleur entre une couleur de la première image et une couleur de la seconde image entre des pixels correspondants de chaque pixel constituant la première image et de chaque pixel constituant la seconde image par alignement de la première image en fonction de la seconde image.

2. Dispositif de traitement d'informations (13) selon la revendication 1,
dans lequel l'unité de conversion de couleur (23) comporte
une base de données de conversion de couleur (31) configurée pour enregistrer la relation de correspondance de couleur spécifiée par l'unité d'alignement (22), et
une unité de mise en œuvre de conversion de couleur (35) configurée pour se référer à la base de données de conversion de couleur (31) et exécuter la conversion de couleur sur les premières images alignées par l'unité d'alignement (22).

3. Dispositif de traitement d'informations (13) selon la revendication 2,
dans lequel l'unité de conversion de couleur (23) comporte en outre une unité d'interpolation de couleur (32) configurée pour générer une relation de correspondance de couleur hautement fiable à l'aide de la relation de correspondance de couleur spécifiée par l'unité d'alignement (22) et enregistrer la relation de correspondance de couleur hautement fiable dans la base de données de conversion de couleur (31).

4. Dispositif de traitement d'informations (13) selon la revendication 3,
dans lequel l'unité d'interpolation de couleur (32) est configurée pour générer la relation de correspondance de couleur hautement fiable en mettant en œuvre une interpolation de couleur permettant d'obtenir une valeur moyenne ou une valeur médiane de couleurs dans un ensemble de couleurs comportant deux pixels ou plus, en particulier,
dans lequel un regroupement agglomératif dans lequel des éléments à des distances proches sont combinés dans un espace colorimétrique correspondant à la première image est utilisé pour déterminer l'ensemble par l'unité d'interpolation de couleur (32).

5. Dispositif de traitement d'informations (13) selon la revendication 2 ou 3,
dans lequel l'unité de conversion de couleur (23) comporte en outre une unité de détermination de relation de correspondance de couleur (34) configurée pour déterminer si la relation de correspondance de couleur enregistrée dans la base de données de conversion de couleur (31) est une conversion de couleur normale ou une falsification, en particulier,
dans lequel l'unité de détermination de relation de correspondance de couleur (34) est configurée pour déterminer si la relation de correspondance de couleur d'une cible de traitement de détermination est une conversion de couleur normale ou une falsification en utilisant une relation de distance entre une couleur de la première image et une couleur de la seconde image associées dans la relation de correspondance de couleur déjà déterminée comme étant une conversion de couleur normale pour la couleur de la première image et la couleur de la seconde image associées dans la relation de correspondance de couleur de la cible de traitement de détermination.

6. Dispositif de traitement d'informations (13) selon la revendication 5,
dans lequel l'unité de conversion de couleur (23) comporte en outre une unité de décision d'ordre de traitement (33) configurée pour décider d'un ordre de traitement indiquant un ordre de la relation de correspondance de couleur pour qu'elle soit une cible de traitement de détermination dans l'unité de détermination de relation de correspondance de couleur (34), en particulier,
dans lequel l'unité de décision d'ordre de traitement (33) est configurée pour obtenir une fiabilité de la relation de correspondance de couleur et décider de l'ordre de traitement selon un degré de la fiabilité.

7. Dispositif de traitement d'informations (13) selon l'une quelconque des revendications précédentes, comprenant en outre :
une première unité d'échantillonnage (25-1) configurée pour réduire une quantité de données par échantillonnage d'une image de référence pour qu'elle soit la première image.

8. Dispositif de traitement d'informations (13) selon la revendication 7,
dans lequel la première unité d'échantillonnage (25-1) est configurée pour alimenter des informations concernant l'échantillon à l'unité d'alignement (22), et
l'unité d'alignement (22) est configurée pour aligner la première image après conversion de la première image à l'aide d'informations concernant l'échantillon, ou
dans lequel la première unité d'échantillonnage (25-1) est configurée pour générer des informations concernant le jugement à partir des informations qui n'ont pas été échantillonnées et alimenter les informations concernant le jugement à l'unité de jugement (24), et
l'unité de jugement (24) est configurée pour décider d'un seuil pour juger s'il y a présence ou absence de falsification dans la seconde image à l'aide des informations concernant le jugement.

9. Dispositif de traitement d'informations (13) selon la revendication 7, comprenant en outre :
une seconde unité d'échantillonnage (25-2) configurée pour réduire une quantité de données par échantillonnage d'une image de requête pour qu'elle soit la seconde image, en particulier,
dans lequel la première unité d'échantillonnage (25-1) est configurée pour alimenter des informations concernant l'échantillon à la seconde unité d'échantillonnage (25-2) ; et
la seconde unité d'échantillonnage (25-2) est configurée pour mettre en œuvre un échantillonnage identique à la première unité d'échantillonnage (25-1) en utilisant les informations concernant l'échantillon.

10. Dispositif de traitement d'informations (13) selon l'une quelconque des revendications précédentes,
dans lequel l'unité de jugement (24) est configurée pour alimenter à l'unité d'alignement (22) des informations concernant une falsification indiquant un ordre de grandeur de falsification dans la seconde image, et
l'unité d'alignement (22) est configurée pour ajuster un paramètre interne utilisé pour aligner la première image de telle sorte que l'ordre de grandeur de falsification dans la seconde image diminue.

11. Dispositif de traitement d'informations (13) selon l'une quelconque des revendications précédentes, comprenant en outre :
une première unité d'affichage (26-1) configurée pour afficher le résultat d'essai de conversion de couleur ; et
une seconde unité d'affichage (26-2) configurée pour afficher la seconde image.

12. Procédé de traitement d'informations, par un dispositif de traitement d'informations (13), comprenant :
la réalisation d'une estimation de conversion de couleur appliquée à une seconde image générée par édition d'image sur une première image, et la sortie d'un résultat d'essai de conversion de couleur dans lequel une conversion de couleur selon l'estimation est appliquée à la première image ;
la comparaison du résultat d'essai de conversion de couleur à la seconde image pour juger s'il y a présence ou absence de falsification dans la seconde image ; et
l'alignement de la première image en fonction de la seconde image en correspondance avec une opération appliquée à la seconde image dans l'édition d'image,
dans lequel on applique la conversion de couleur à la première image alignée par l'unité d'alignement (22), et
dans lequel on spécifie une relation de correspondance de couleur entre une couleur de la première image et une couleur de la seconde image entre des pixels correspondants de chaque pixel constituant la première image et chaque pixel constituant la seconde image par alignement de la première image en fonction de la seconde image.

13. Programme comprenant des instructions qui, lorsque le programme est exécuté par un ordinateur, amènent l'ordinateur à effectuer le procédé selon la revendication 12.
